# EUROPEAN PATENT SPECIFICATION

(11) **EP 1 533 218 B1**
(45) Date of publication and mention of the grant of the patent: **12.03.2008**
(21) Application number: 04022187.1
(22) Date of filing: 17.09.2004
(51) Int. Cl.: B62M 3/08

(54) **Bicycle pedal**
Fahrradpedal
Pédale de bicyclette

(30) Priority: 21.11.2003 US 717981
(43) Date of publication of application: 25.05.2005
(73) Proprietor: SHIMANO INC., Osaka 590-8577 (JP)
(72) Inventor: Muraoka, Tsutomu, Sakai, Osaka 590-0111 (JP)
(74) Representative: Grosse, Wolfgang

(56) References cited:
- US-A- 5 419 218
- US-A- 6 151 989
- US-B1- 6 230 583
- US-B1- 6 282 984
- US-B1- 6 640 663

## Description

### BACKGROUND OF THE INVENTION

### Field of the Invention

This invention generally relates to a bicycle pedal. More specifically, the present invention relates clipless or step-in bicycle pedal, which is configured to engage a cleat that is coupled to a bicycle shoe.

### Background Information

Bicycling is becoming an increasingly more popular form of recreation as well as a means of transportation. Moreover, bicycling has become a very popular competitive sport for both amateurs and professionals. Whether the bicycle is used for recreation, transportation or competition, the bicycle industry is constantly improving the various components of the bicycle as well as the frame of the bicycle. One component that has been extensively redesigned is the bicycle pedal.

In recent years, bicycle pedals have been designed for specific purposes such as for pleasure, off road biking, road racing, etc. One particular type of bicycle pedal, which is gaining more popularity, is the step-in or clipless pedal, which releasably engages a cleat secured to the sole of a cyclist's shoe. The clipless pedal has a pedal spindle that can be mounted on the crank of a bicycle, a pedal body that is rotatably supported on this pedal spindle, and a cleat engagement mechanism. In an off road bicycle pedal a cleat engagement mechanism is formed on both sides of the pedal body for engaging a cleat. A road-racing pedal, on the other hand, typically only has a cleat engagement mechanism on one side of the pedal body. In either case, in these types of bicycle pedals, the rider steps onto the pedal and the cleat engagement mechanism automatically grips on to the cleat secured to the bottom of the cyclist's shoe.

With this type of step-in or clipless pedal, the shoe and the pedal are in a state of constant engagement when the cleat is engaged in the cleat clamping members, so the pedaling force can be transmitted efficiently to the pedals. As a result, step-in or clipless pedals are widely employed on racing bicycles used in road racing and mountain bike racing.

When attaching the cyclist's shoe to the step-in or clipless pedal via the cleat, the cyclist moves the shoe obliquely downwardly and forwardly relative to the pedal body such that the front end of the cleat engages a front hook or clamping member of the pedal body. However, the bicycle pedal is often not in a horizontal position in which the rider can easily step into engagement with the clamping members. Due to the unique construction of the bicycle pedals, the rider some times has a hard time rotating the pedal from a non-horizontal position to a substantially horizontal position.

Once the front end of the cleat is engaged with the front hook of the pedal body, the cyclist places the rear end of the cleat in contact with a guide portion of the rear hook or clamping member of the pedal body. In this position, the cyclist presses the shoe downwardly against the pedal to cause the rear hook or clamping member to initially pivot rearwardly against the force of a spring to move the rear hook or clamping member to a cleat releasing position. The rear end of the cleat then enters a position opposite a back face of the rear hook or clamping member. Then, the rear hook or clamping member returns under the force of a biasing member or spring so that the rear hook or clamping member engages the rear end of the cleat. This engagement fixes the cyclist's shoe to the pedal via the cleat.

When releasing the shoe from the pedal, the cyclist will typically turn the shoe about an axis perpendicular or approximately perpendicular to the tread of the pedal, using the front end of the cleat as a pivoting point. As a result of this pivoting action, the rear hook or clamping member is pivoted rearwardly against the force of the spring to a cleat releasing position to release the shoe. It is important that the cleat does not inadvertently release the pedal during normal pedaling. Some of these prior step-in or clipless pedals can inadvertently release the cleat during normal pedaling if the spring force on the rear clamping member is set too low. However, if the spring force on the rear clamping member is set too high, the cleat may not release from the pedal properly. This could result in the rider's shoe not properly releasing from the pedal at the desired application of force because the rider's shoe either releases too easily from the pedal or does not release at the proper time. Thus, some of these step-in or clipless pedals and the cleats for these pedals are designed with adjustment mechanisms to change the release force required for the rider to disengage the cleat from the pedal. However, these adjustment mechanisms increase the overall cost of the pedals. In particular, these adjustment mechanisms can be complicated and expensive to manufacture and assemble.

Document US-A-6 151 989 shows a bicycle pedal having a pedal body with a front and a rear clamping member to engage a cleat of a shoe. The front clamping member pivots about a first pivot axis. The rear clamping member pivots about a second pivot axis in a generally rearward direction. This pedal has a symmetrical arrangement of the front and rear clamping members, wherein the rear clamping member extends past the end of the pedal body by an at least equal or smaller distance than a distance between the front and the rear clamping member. Such arrangement of front and rear clamping members in some cases makes it difficult for a rider to achieve a horizontal position of the pedal for easy engagement with the cleat of the shoe.

In view of the above, there exists a need for an improved bicycle pedal that takes into account at least come of the above mentioned problems in the prior art. This invention addresses this need in the prior art as well as other needs, which will become apparent to those skilled in the art from this disclosure.

### SUMMARY OF THE INVENTION

One object of the present invention is to provide a bicycle pedal that is configured and arranged such the rider can easily step into engagement with the clamping members when the bicycle pedal is not in a horizontal position.

Another object of the present invention is to provide a step-in bicycle pedal that is relatively lightweight and malfunction free.

Yet another object of the present invention is to provide a step-in bicycle pedal that is relatively simple and inexpensive to manufacture.

In accordance with one aspect of the present invention, the foregoing objects can basically be achieved by providing a bicycle pedal that comprises a pedal shaft, a pedal body, a front clamping member and a rear clamping member. The pedal shaft has a center rotational axis. The pedal body is rotatably coupled to the pedal shaft about the center rotational axis of the pedal shaft. The pedal body has a first end and a second end with a center plane extending between the first and second ends and passing through the center rotational axis of the pedal shaft. The front clamping member is coupled to the first end of the pedal body. The front clamping member has a front cleat engagement surface facing towards the center plane of the pedal body and a front cleat stop surface. The rear clamping member is coupled to the second end of the pedal body. The rear clamping member has a rear cleat engagement surface facing towards the center plane of the pedal body and a rear cleat stop surface spaced rearwardly from the front cleat stop surface by a first predetermined distance. The rear clamping member has an elongated tongue extending in a substantially rearward direction past the second end of the pedal body by a second predetermined distance that is at least substantially equal to or greater than the first predetermined distance.

In accordance with another aspect of the present invention, the foregoing objects can basically be achieved by providing a bicycle pedal that comprises a pedal shaft, a pedal body, a front clamping member and a rear clamping member. The pedal shaft has a center rotational axis. The pedal body rotatably is coupled to the pedal shaft about the center rotational axis of the pedal shaft. The pedal body has a first end and a second end with a center plane extending between the first and second ends and passing through the center rotational axis of the pedal shaft. The front clamping member is pivotally coupled to the first end of the pedal body about a first pivot axis to pivot in a generally forward direction through a first predetermined angle. The front clamping member has a front cleat engagement surface facing towards the center plane of the pedal body from a first side of the center plane and a front cleat stop surface. The rear clamping member is pivotally coupled to the second end of the pedal body about a second pivot axis to pivot in a generally rearward direction through a second predetermined angle that is larger than the first predetermined angle. The rear clamping member has a rear cleat engagement surface facing towards the center plane of the pedal body from the first side of the center plane and a rear cleat stop surface.

These and other objects, features, aspects and advantages of the present invention will become apparent to those skilled in the art from the following detailed description, which, taken in conjunction with the annexed drawings, discloses a preferred embodiment of the present invention.

### BRIEF DESCRIPTION OF THE DRAWINGS

Referring now to the attached drawings which form a part of this original disclosure:
Figure 1 is a side elevational view of a bicycle that is equipped with a pair of bicycle pedals in accordance with a preferred embodiment of the present invention;
Figure 2 is a top plan view of a pair of bicycle pedal assemblies in a first arrangement with the cleats being arranged to produce a low cleat release force in accordance with the preferred embodiment of the present invention;
Figure 3 is a top plan view of the pair of bicycle pedal assemblies illustrated in Figure 2 with the cleats being rotated by a first predetermined outward twisting force;
Figure 4 is a top plan view of the pair of bicycle pedal assemblies in a second arrangement with the cleats being arranged to produce a high cleat release force in accordance with the preferred embodiment of the present invention;
Figure 5 is a top plan view of the pair of bicycle pedal assemblies illustrated in Figure 4 with the cleats being rotated by a second predetermined outward twisting force;
Figure 6 is a side elevational view of the right bicycle pedal illustrated in Figures 2-5, with the rear clamping member of the right bicycle pedal pivoted to a release position that corresponds to with the cleat being rotate relative to the right bicycle pedal by application of the first or second predetermined outward twisting force;
Figure 7 is an inside side elevational view of the right bicycle pedal illustrated in Figures 2-6, without a cleat coupled thereto;
Figure 8 is an outside elevational view of the right bicycle pedal illustrated in Figures 2-7, without the cleat coupled thereto;
Figure 9 is a top plan view of the right bicycle pedal illustrated in Figures 2-8, without a cleat coupled thereto;
Figure 10 is a rear end elevational view of the right bicycle pedal illustrated in Figures 2-9, without the cleat coupled thereto;
Figure 11 is a longitudinal cross-sectional view of the bicycle pedal assembly illustrated in Figures 5 and 6, as seen along section line 11-11 of Figure 10, without the cleat coupled thereto;
Figure 12 is a top plan view of the right bicycle pedal body for the right bicycle pedal illustrated in Figures 3-11;
Figure 13 is an inside elevational view of the right bicycle pedal body illustrated in Figure 12 for the right bicycle pedal illustrated in Figures 3-11;
Figure 14 is a transverse cross-sectional view of the right bicycle pedal body illustrated in Figures 12 and 13 for the bicycle pedal illustrated in Figures 3-11 as seen along section line 14-14 of Figure 12;
Figure 15 is a side perspective view of one of the pivot pins for pivotally coupling one of the clamping members to the bicycle pedal bodies illustrated in Figures 2-5;
Figure 16 is a perspective view of one of the biasing members (a pair of torsion springs) for urging one pair of the clamping members of the bicycle pedal assemblies to the rest or cleat engaging positions;
Figure 17 is a top plan view first side elevational view of one of the pedal body covers for the bicycle pedal assemblies illustrated in Figures 2-5;
Figure 18 is a side elevational view of the pedal body cover illustrated Figure 17 for the bicycle pedal assemblies illustrated in Figures 2-5;
Figure 19 is a side elevational view of the front clamping member for the bicycle pedal assemblies illustrated in Figures 2-5;
Figure 20 is a top plan view of the front clamping member illustrated in Figure 19 for the bicycle pedal assemblies illustrated in Figures 2-5;
Figure 21 is a rear end elevational view of the front clamping member illustrated in Figures 19 and 20 for the bicycle pedal assemblies illustrated in Figures 2-5;
Figure 22 is a cross-sectional view of the front clamping member illustrated in Figures 19-21 for the bicycle pedal assemblies illustrated in Figures 2-5, as seen along section line 22-22 of Figure 20;
Figure 23 is an oblique view of the front clamping member illustrated in Figures 19-22 for the bicycle pedal assemblies illustrated in Figures 2-5;
Figure 24 is a side elevational view of the front clamping member for the bicycle pedal assemblies illustrated in Figures 2-5;
Figure 25 is a top plan view of the front clamping member illustrated in Figure 24 for the bicycle pedal assemblies illustrated in Figures 2-5;
Figure 26 is a rear end elevational view of the front clamping member illustrated in Figures 24 and 25 for the bicycle pedal assemblies illustrated in Figures 2-5;
Figure 27 is a cross-sectional view of the front clamping member illustrated in Figures 24-26 for the bicycle pedal assemblies illustrated in Figures 3-11, as seen along section line 27-27 of Figure 25;
Figure 28 is an oblique view of the front clamping member illustrated in Figures 24-27 for the bicycle pedal assemblies illustrated in Figures 2-5;
Figure 29 is a front end elevational view of the first cleat for use with both the right bicycle pedal and the left bicycle pedal illustrated in Figures 2-5
Figure 30 is a side elevational view of the first cleat illustrated in Figure 29 for use with both the right bicycle pedal and the left bicycle pedal illustrated in Figures 2-5;
Figure 31 is a rear end elevational view of the first cleat illustrated in Figures 29 and 30 for use with both the right bicycle pedal and the left bicycle pedal illustrated in Figures 2-5;
Figure 32 is a bottom plan view of the first cleat illustrated in Figures 29-31 for use with both the right bicycle pedal and the left bicycle pedal illustrated in Figures 2-5;
Figure 33 is a top plan view of the first cleat illustrated in Figures 29-32 for use with both the right bicycle pedal and the left bicycle pedal illustrated in Figures 2-5;
Figure 34 is a front end elevational view of the second cleat for use with both the right bicycle pedal and the left bicycle pedal illustrated in Figures 2-5;
Figure 35 is a side elevational view of the second cleat illustrated in Figure 29 for use with both the right bicycle pedal and the left bicycle pedal illustrated in Figures 2-5;
Figure 36 is a rear end elevational view of the second cleat illustrated in Figures 34 and 35 for use with both the right bicycle pedal and the left bicycle pedal illustrated in Figures 2-5;
Figure 37 is a bottom plan view of the second cleat illustrated in Figures 34-36 for use with both the right bicycle pedal and the left bicycle pedal illustrated in Figures 2-5;
Figure 38 is a top plan view of the second cleat illustrated in Figures 34-37 for use with both the right bicycle pedal and the left bicycle pedal illustrated in Figures 2-5;
Figure 39 is a side elevational view of a left bicycle shoe with one of the cleats of the present invention coupled thereto, prior to coupling of the cleat to the left bicycle pedal;
Figure 40 is a side elevational view of a left bicycle shoe with one of the cleats of the present invention coupled thereto, prior to coupling of the cleat to the left bicycle pedal;
Figure 41 is a side elevational view of a left bicycle shoe with one of the cleats of the present invention coupled thereto, prior to coupling of the cleat to the left bicycle pedal; and
Figure 42 is a side elevational view of a left bicycle shoe with one of the cleats of the present invention coupled thereto, prior to coupling of the cleat to the left bicycle pedal.

### DETAILED DESCRIPTION OF THE PREFERRED EMBODIMENTS

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims.

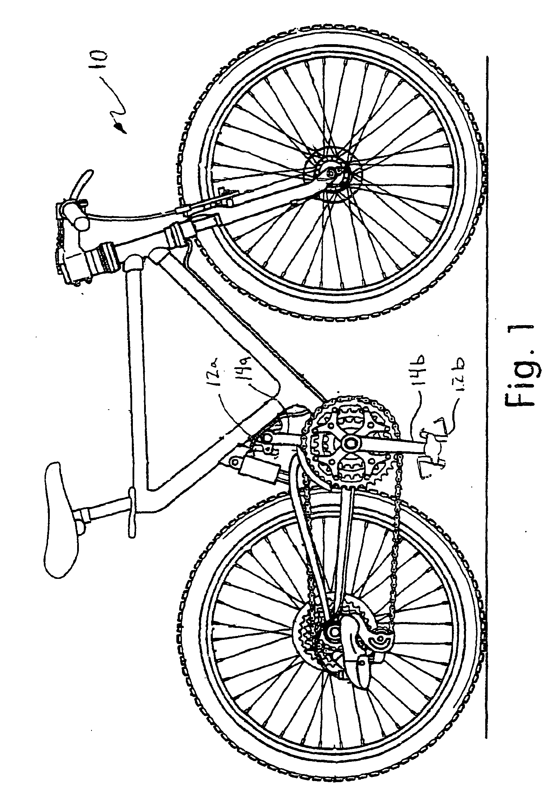

Referring initially to Figure 1, a bicycle 10 is illustrated that is equipped with a left bicycle pedal 12a and a right bicycle pedal 12b in accordance with a first embodiment of the present invention. The bicycle pedals 12a and 12b are fixedly coupled to a pair of bicycle crank arms 14a and 14b of a bicycle 10 for rotation therewith.

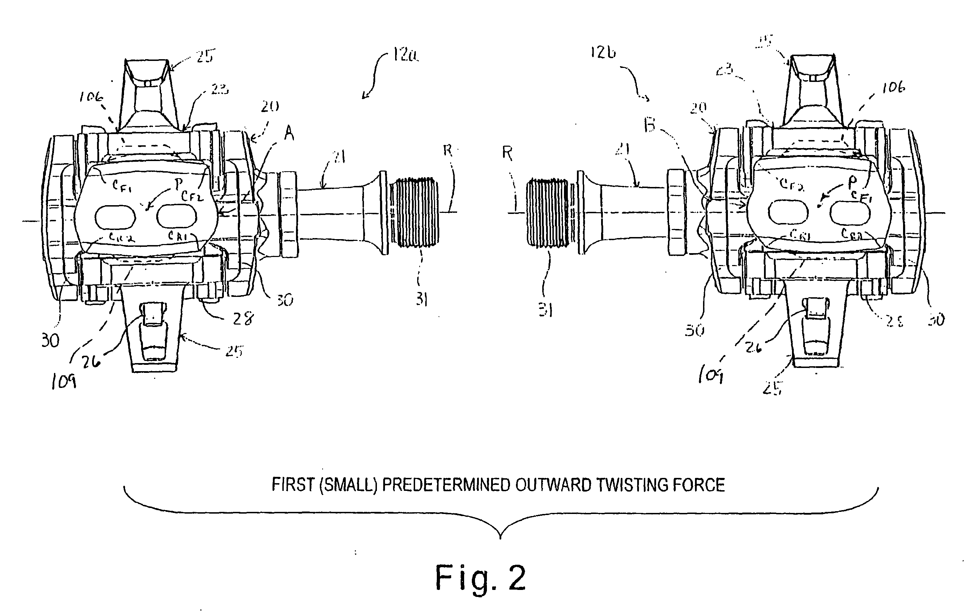

As seen in Figures 2-5, the left and right bicycle pedals 12a and 12b selectively engage a pair of cleats A and B. Thus, the left and right bicycle pedals 12a and 12b and the cleats A and B that are form a bicycle pedal assembly in accordance with a first embodiment of the present invention. The first and second bicycle shoe cleats A and B are preferably fixedly coupled to a pair of bicycle shoes in a conventional manner (e.g., a pair of screws) to releasably couple the cyclist's foot to the bicycle pedals 12a and 12b.

In the illustrated embodiment, the bicycle pedals 12a and 12b are especially designed for use with off-road bicycles as opposed to use with a road bicycle. However, it will be apparent to those skilled in the art from this disclosure that the features of the bicycle pedals 12a and 12b can be used in the construction of a road type of bicycle pedal if needed and/or desired. In other words, it will be apparent that the bicycle pedals 12a and 12b can be designed such that the first and second bicycle shoe cleats A and B can only be coupled to one side of the bicycle pedals 12a and 12b.

Specifically, the cleats A and B are engaged with the bicycle pedals 12a and 12b by pressing the cleats A and B into the pedals 12a and 12b with a forward and downward motion. This releasably locks the cleats A and B to the pedals 12a and 12b. The cleats A and B can be released from the pedals 12a and 12b by twisting the heel of the shoe to the outside of pedals 12a and 12b as discussed below in more detail.

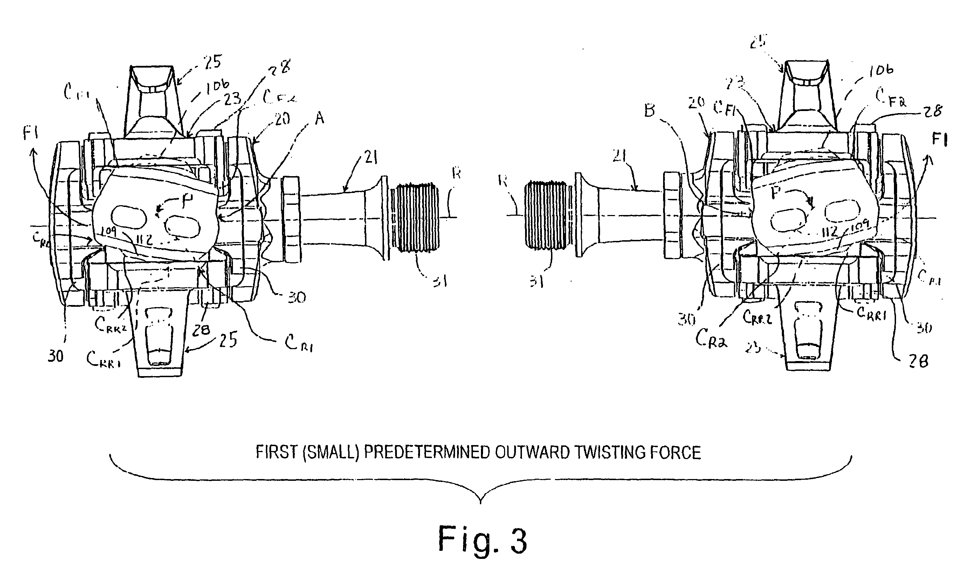

The first and second bicycle shoe cleats A and B are configured and arranged to selectively cooperate with the bicycle pedals 12a and 12b such that two different release forces can be attained using a single pair of cleats A and B. In particular, as illustrated in Figures 2 and 3, the first and second bicycle shoe cleats A and B are configured and arranged to release upon application of a first predetermined amount of outward twisting force F1 when the first bicycle shoe cleat A is engaged with the left bicycle pedal 12a and the second bicycle shoe cleat B is engaged with the right bicycle pedal 12b.

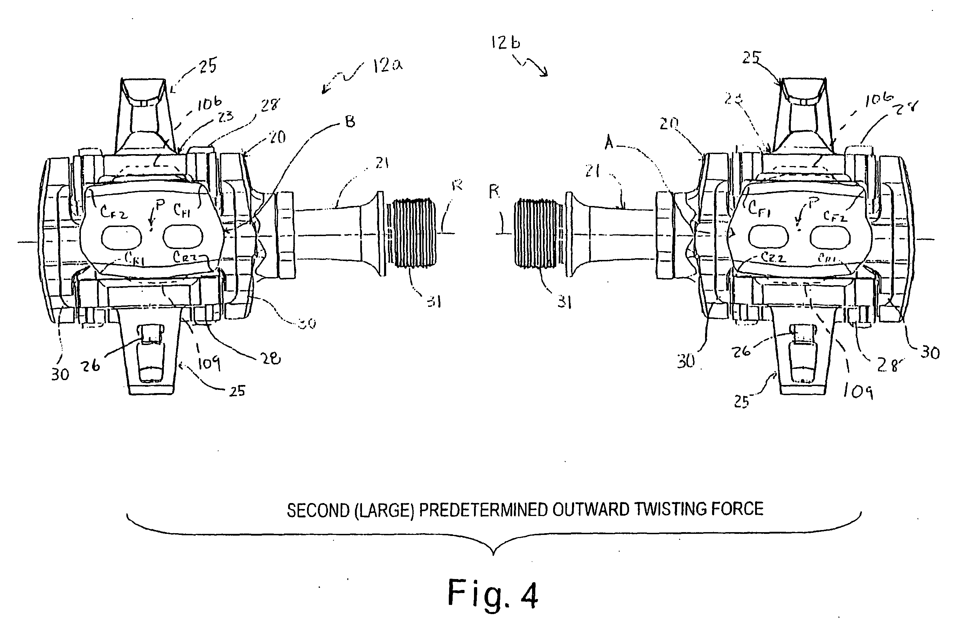

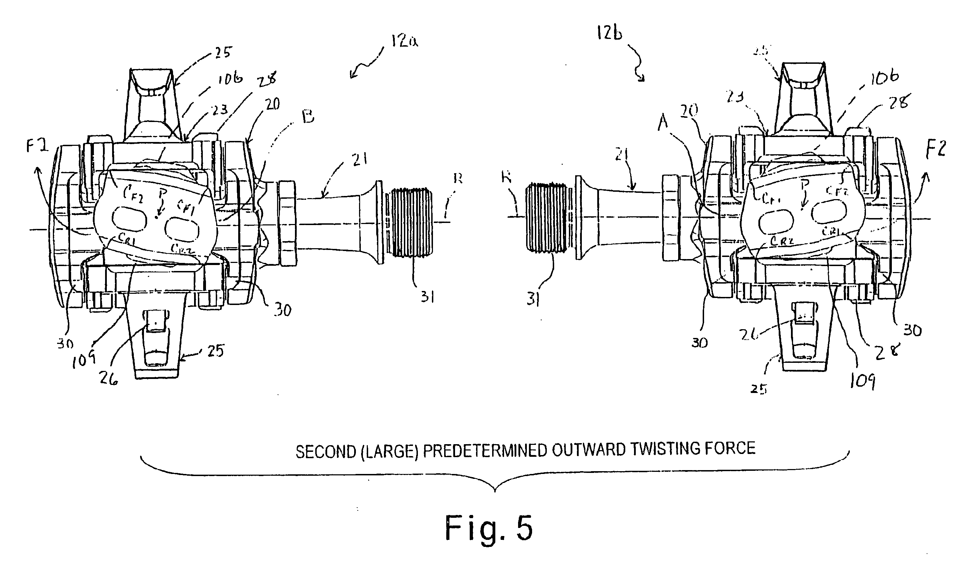

However, as illustrated in Figures 4 and 5, the first and second bicycle shoe cleats A and B are configured and arranged to release upon application of a second predetermined amount of outward twisting force F2 that is higher than the first predetermined amount of outward twisting force F 1 when the first bicycle shoe cleat A is engaged with the right bicycle pedal 12b and the second bicycle shoe cleat B is engaged with the left bicycle pedal 12a.

As seen in Figures 2-5, the left bicycle pedal 12a is a mirror image of the right bicycle pedal 12b. It will be apparent to those skilled in the art from this disclosure that the description of the left bicycle pedal 12a also applies to the right bicycle pedal 12b and vice a versa. Thus, the same reference numerals will be used to describe both the left and right pedals 12a and 12b. Moreover, the left bicycle pedal 12a will not be discussed or illustrated in further detail herein for the sake of brevity.

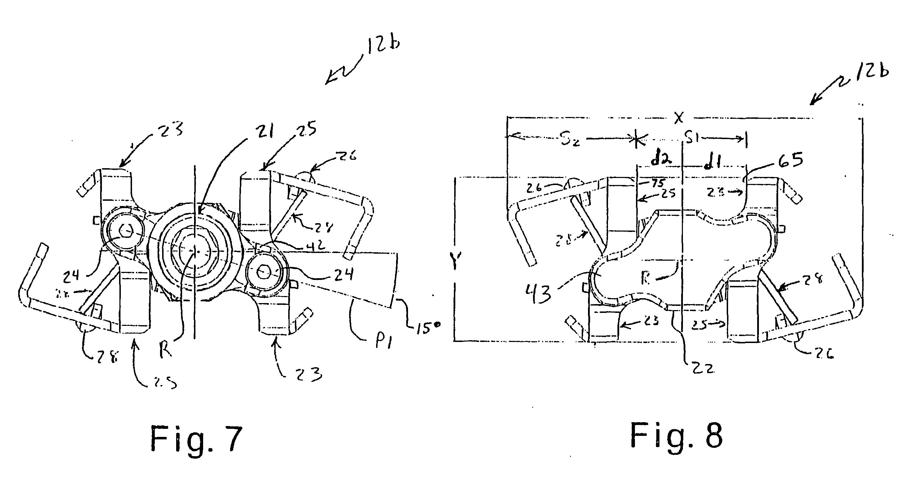

The left and the right bicycle pedals 12a and 12b basically each includes a pedal shaft or spindle 21, a pedal body 22, a pair of front (first) clamping members 23 pivotally coupled to the pedal body 22 by a pair of pivot pins 24, a pair of rear (second) clamping members 25, a pair of spring holders 26 and a pair of biasing members 28. Also, the pedal body 22 preferably includes two pairs of pedal body covers 30 that overlie a center upper portion of the pedal body 22 to protect the pedal body 22 from scratches. The pedals 12a and 12b have an overall length X and an overall height Y as seen in Figure 8.

As shown in Figure 1, the pedal spindles 21 are fastened to the crank arms 14a and 14b of the bicycle 10, with the pedal bodies 22 being rotatably coupled to the pedal spindle 21 for supporting the rider's feet. Specifically, the cleats A and B are fixedly attached to the bicycle shoes, which in turn are releasably attached to the pedal bodies 22 via one of the pairs of the front and rear clamping members 23 and 25.

The pedal spindle 21 is a multi-step spindle having numerous stepped portions. The pedal spindle 21 has a first end 31 with threads formed thereon for threadedly coupling bicycle pedal to the crank arm 14a or 14b in a conventional manner. The other end of the pedal spindle 21 rotatably supports the pedal body 22 in a conventional manner. The pedal body 22 can freely rotate about the center rotational axis R of the pedal spindle 21. Since the pedal spindle 21 is relatively conventional and its specific construction is not critical to the present invention, the construction of the pedal spindle 21 will not be discussed in detail herein.

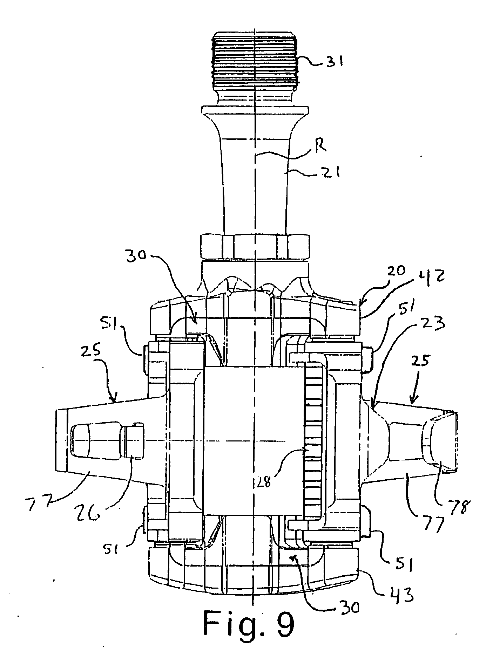

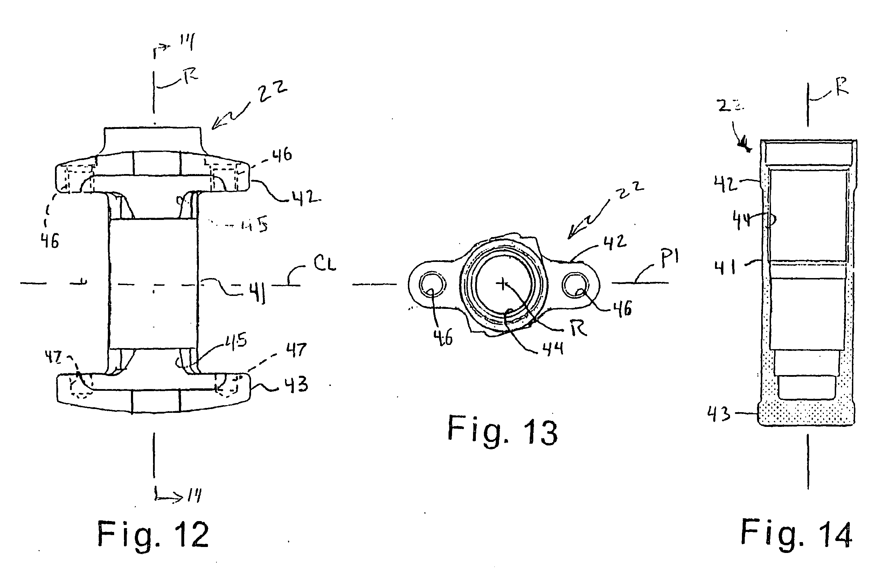

As shown in Figures 12-14, the pedal body 22 is an H-shaped member (see Figure 12) that basically includes a center tubular portion 41, an inner side mounting portion 42 and an outer side mounting portion 43. The pedal body 22 is a rigid member that is preferably made as a one-piece, unitary member from a lightweight material such as an aluminum alloy. As best seen in Figures 9-11, the pedal body 22 is rotatably coupled to the pedal spindle 21 for rotation about a center rotational axis R of the pedal spindle 21.

In particular, the center tubular portion 41 has a stepped bore 44 (see Figure 14) for receiving the pedal spindle 21 for rotation about the center rotational axis R. The side mounting portions 42 and 43 are configured and arranged to pivotal support the clamping members 23 and 25 via the pivot pins 24. The inner side mounting portion 42 extends in a forward and backward direction from an inner end of the center tubular portion 41. The side mounting portions 42 and 43 are provided with a pair of cover receiving recesses 45 on each of the sides of the pedal body 22. The cover receiving recesses 45 are configured and arranged to receive the pedal body covers 30, respectively.

The inner side mounting portion 42 has a pair of threaded holes or bores 46 that threadedly receive the pivot pins 24 therein. The outer side mounting portion 43 extends in a forward and backward direction from an outer end of the center tubular portion 41. The outer side mounting portion 43 has a pair of blind bores 47 that receives the free ends of the pivot pins 24 therein. The unthreaded blind bores 47 are axially aligned with the threaded bores 46 for receiving the outer end of the pivot pins 24. The bores 46 and 47 are configured to secure the pivot pins 24 therein in an aesthetic and reliable manner. Thus, a smooth outer surface of the pedal body 22 can be formed. In other words, the threaded bores 46 aids in providing an attractive appearance, since the heads of the pivot pins 24 are not visible from the outside of the pedal body 22. One of the front clamping members 23 is pivotally mounted at each end of the pedal body 22 by one of the pivot pins 24. Likewise, one of the rear clamping members 25 is pivotally mounted at each end of the pedal body 22 by one of the pivot pins 24.

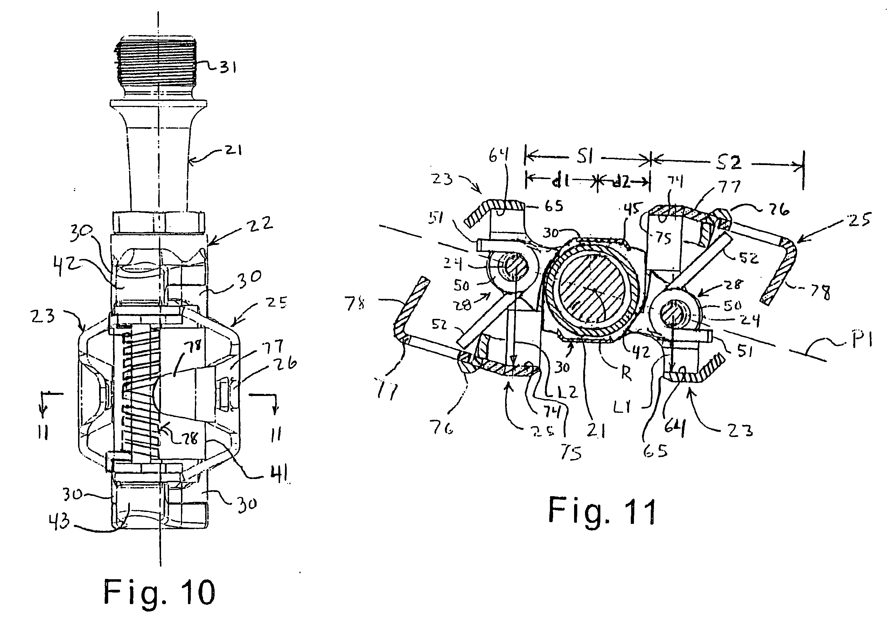

The pedal body 22 has a center longitudinal line CL extending between the front and the rear ends as seen in Figure 10. The center longitudinal line CL of the pedal body 22 extends substantially perpendicular to the center rotational axis R of the pedal spindle 21 and bisects the clamping members 23 and 25. The pedal body 22 also has a center plane P1 extending between the first and second ends of the pedal body 22 with the center plane P1 passing through the center rotational axis R of the pedal spindle 21 and the centers of bores 46 and 47 as seen in Figures 11 and 13. The center plane P divides the pedal body 22 into first and second cleat engagement sides. A cleat receiving area is formed on each side of pedal body 22 for receiving and supporting the cleats A and B thereon. More specifically, the cleat receiving area is defined the area extending longitudinally between the clamping members 23 and 25 on each side of the pedal body 22. Thus, the cleats A and B are designed to releasably couple a sole of a shoe to the bicycle pedals 12a and 12b by a pair of the front and rear clamping members 23 and 25 that located on the same side of the pedal body 22 relative to the center plane P1.

Each biasing member 28 is preferably formed by a pair of torsion springs. The torsion springs of the biasing members 28 have their coiled portions 50 mounted on the pivot pins 24, with one end 51 of each spring engaging a part of one of the front clamping members 23, and the other end 52 of each spring engaging a part of one of the rear clamping members 25. The biasing members 28 normally urge clamping members 23 and 25 to rotate about their respective pivot pins 24 from their cleat releasing positions to their cleat engaging or clamping positions. In other words, the biasing members 28 normally maintain the clamping members 23 and 25 in their cleat engaging positions. The release forces of the biasing members 28 of the clamping members 23 and 25 are controlled by switching which of the cleats A and B are used with which of the pedals 12a and 12b.

Referring back to Figures 2-5, the clamping members 23 and 25 selectively engage one of the cleats A and B. The clamping members 23 and 25 are pivotally coupled to the ends of the pedal body 22 by the pivot pins 24. As seen in Figure 10, the clamping members 23 and 25 are curved in a roughly U-shaped configuration when view along the center longitudinal line CL of the pedal body 22, with their two free ends being swingably supported by the pivot pins 24 that pass between the inner and outer side mounting portions 42 and 43 of the pedal body 22.

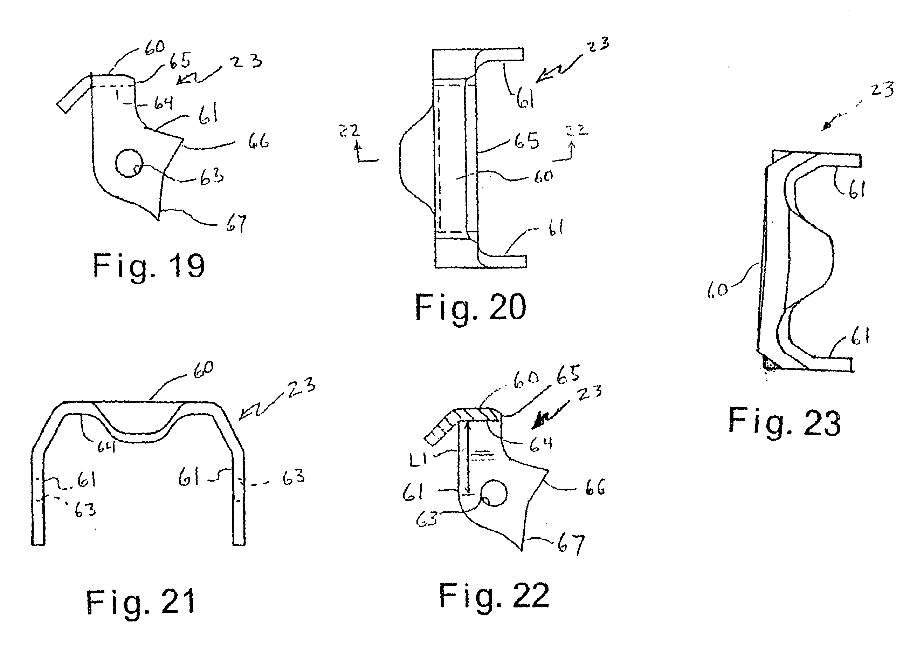

Referring now to Figures 19-23, each of the front clamping members 23 includes a connecting portion 60 with a pair of legs 61 extending downwardly from connecting portion 60 for coupling the front clamping member 23 to the pedal body 22 via one of the pivot pins 24. More specifically, each of the legs 61 of the front clamping members 23 has a mounting hole 63 formed therein for receiving one of the pivot pins 24. Accordingly, each of the front clamping members 23 is pivotally mounted about its respective pivot pin 24 for movement between a cleat clamping or engaging position and a cleat releasing position.

Each of the connecting portions 60 of the front clamping members 23 has a front cleat engagement portion or surface 64 and a front cleat stop portion or surface 65. The front cleat engagement surface 64 faces generally towards the center plane P1 of the pedal body 22, while the front cleat stop surface 65 is spaced forwardly from the center rotational axis R of the pedal spindle 21 by a first predetermined distance d1 measured parallel to the front cleat engagement surface 64 as seen in Figures 8 and 11. The front cleat engagement surface 64 of each front clamping member 23 is configured and arranged to engage a front portion of the cleats A and B to limit movement of the cleats A an B away from the pedal body. The front cleat stop surface 65 of each front clamping member 23 is configured and arranged to engage a front portion of the cleats A and B to limit forward movement of the cleats A and B. The front cleat engagement surface 64 is a flat planar surface. The front cleat stop surface 65 is a flat planar surface that extends substantially perpendicular to the front cleat engagement surface 64.

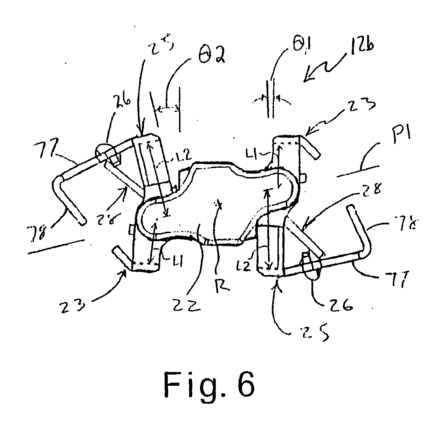

Each of the legs 61 of the front clamping members 23 also has a first stop portion or flange 66 and a second stop portion or flange 67. The first stop portions 66 of each of the front clamping members 23 are configured and arranged to engage the pedal body 22 to limit rotational movement of the front clamping member 23 in a first rotational direction about the respective one of the pivot pins 24. The second stop portions 67 of each of the front clamping members 23 are configured and arranged to engage the pedal body 22 to limit rotational movement of the front clamping member 23 in a second rotational direction about the respective one of the pivot pins 24. More specifically, the first stop portions 66 of each of the front clamping members 23 are normally biased against the pedal body 22 by the respective one of the biasing members 28. The second stop portions 67 of each of the front clamping members 23 are normally spaced from pedal body 22 by a predetermined amount. Thus, as seen in Figure 6, the front clamping members 23 can pivot about the pivot pins 24 against the urging forces of the biasing members 28 such that the front clamping members 23 can pivot in a generally forward direction by a first predetermined rotational distance or amount *θ*1. Preferably, the front clamping members 23 can pivot in a generally forward direction by approximately three degrees to about five degrees as measured about the center axis of the respective one of the pivot pins 24.

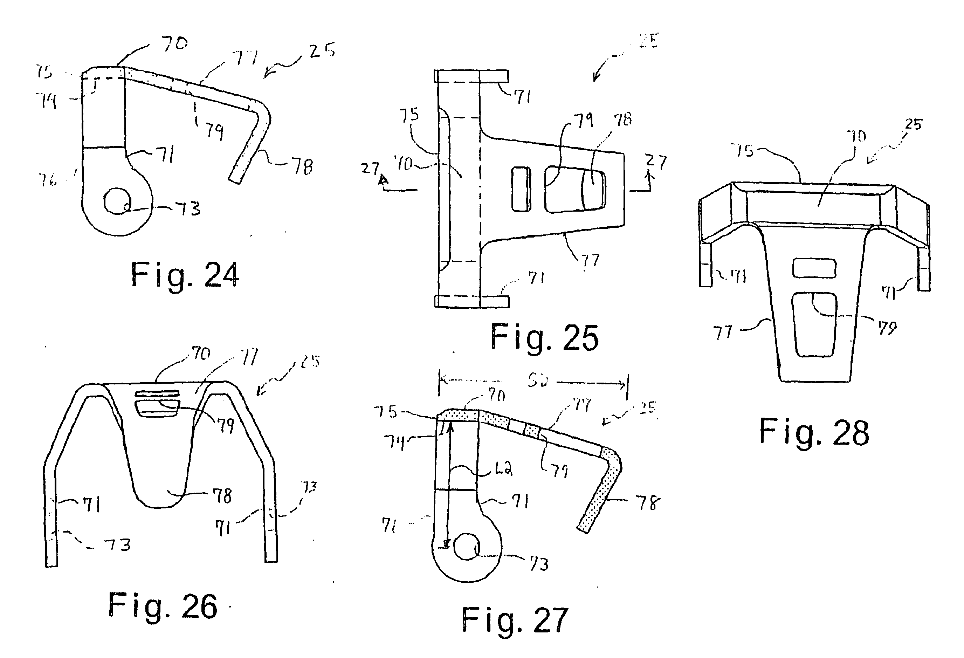

Referring now to Figures 24-28, each of the rear clamping members 25 includes a connecting portion 70 with a pair of legs 71 extending downwardly from connecting portion 70 for coupling the rear clamping member 25 to the pedal body 22 via one of the pivot pins 24. More specifically, each of the legs 71 of the rear clamping members 25 has a mounting hole 73 formed therein for receiving one of the pivot pins 24. Accordingly, each of the rear clamping members 25 is pivotally mounted about its respective pivot pin 24 for movement between a cleat clamping or engaging position and a cleat releasing position.

Each of the connecting portions 70 of the rear clamping members 25 has a rear cleat engagement portion or surface 74 and a rear cleat stop portion or surface 75. The rear cleat engagement surface 74 faces generally towards the center plane P1 of the pedal body 22. The rear cleat stop surface 75 is spaced rearwardly from the center rotational axis R of the pedal spindle 21 by a second predetermined distance d2 measured parallel to the rear cleat engagement surface 74 as seen in Figures 8 and 11. The rear cleat engagement surface 74 of each rear clamping member 25 is configured and arranged to engage a rear portion of the cleats A and B to limit movement of the cleats A an B away from the pedal body. The rear cleat stop surface 75 of each rear clamping member 25 is configured and arranged to engage a rear portion of the cleats A and B to limit rearward movement of the cleats A and B. The rear cleat engagement surface 75 is a flat planar surface. The rear cleat stop surface 75 is a flat planar surface that extends substantially perpendicular to the rear cleat engagement surface 74.

Each of the legs 71 of the rear clamping members 25 also has a stop surface 76 that is configured and arranged to engage the pedal body 22 to limit rotational movement of the rear clamping member 25 in a first rotational direction about the respective one of the pivot pins 24, i.e., hold the rear clamping member 25 in rest or cleat engaging position. More specifically, the stop surfaces 76 of each of the rear clamping members 25 are normally biased against the pedal body 22 by the respective one of the biasing members 28. Thus, the rear clamping members 25 can pivot about the pivot pins 24 against the urging forces of the biasing members 28 such that the rear clamping members 25 can pivot in a generally rearward direction by a predetermined rotational distance or amount *θ*2, as seen in Figure 6. Preferably, the predetermined rotational distance *θ*2 is about thirteen degrees, when the pedal and cleat are arranged to require the first predetermined outward twisting force F1 and about fourteen degrees, when the pedal and cleat are arranged to require the second predetermined outward twisting force F2. Preferably, the rear clamping members 25 can pivot in a generally rearward direction by at least fourteen degrees as measured about the center axis of the respective one of the pivot pins 24.

As seen in Figure 11, first and second cleat engagement surfaces 64 and 74 preferably lie in substantially the same plane, which forms an acute angle with the center plane P1. Thus, the first and second cleat engagement surfaces 64 and 74 hold the cleat A or B from moving vertically from the pedal body 22. Preferably, the first cleat engagement surface 64 is spaced from the pivot axis of the pivot pin 24 by a predetermined distance L1, while the second cleat engagement surface 74 is spaced from the pivot axis of the pivot pin 24 by a predetermined distance L2 that is larger than the predetermined distance L1. The first and second cleat stop surfaces 65 and 75 hold the cleat A or B from moving in a front to rearward direction of the pedal body 22. Preferably, the first and second cleat stop surfaces 65 and 75 are spaced apart by a predetermined distance S1. Moreover, the second cleat stop surface 75 is spaced (offset) from the center rotational axis R of the pedal spindle 21 by the predetermined distance d2, while the first cleat stop surface 65 is spaced (offset) from the center rotational axis R of the pedal spindle 21 by the predetermined distance d1 that is larger than the predetermined distance d2. The dimensions d1 and d2 are measured along a plane that extends perpendicular to the first and second cleat stop surfaces 65 and 75. Since dimension d1 is greater than the dimension d2, the step-in torque is approximately 17% greater than if the dimensions d1 and d2 were equal.

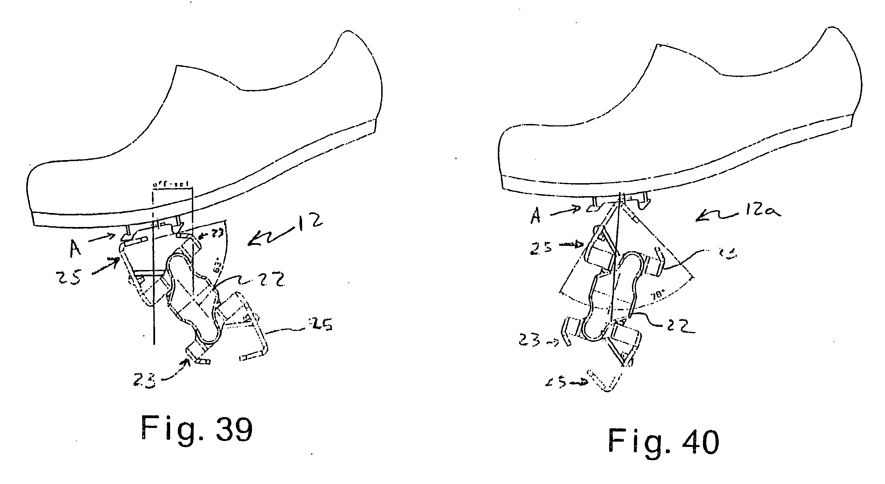

As seen in Figures 24-28, the rear clamping members 25 are provided with a generally horizontal portion 77 and a generally vertical portion 78. The portions 77 and 78 form an elongated tongue having an L-shape as viewed from the side. This elongated tongue assists the rider in rotating the real body 22 to horizontal position for engagement as seen in Figures 39 and 40. As seen in Figure 11, the generally horizontal portion 77 extends in a substantially rearward direction past the end of the pedal body 22 by a predetermined distance S2 that is at least substantially equal to or greater than the predetermined distance S1. The generally horizontal portion 77 of the rear clamping members 25 is provided with an opening 79 for receiving the spring holder 26 to couple the second ends 52 of the torsion springs that form the biasing member 28 to the rear clamping member 25.

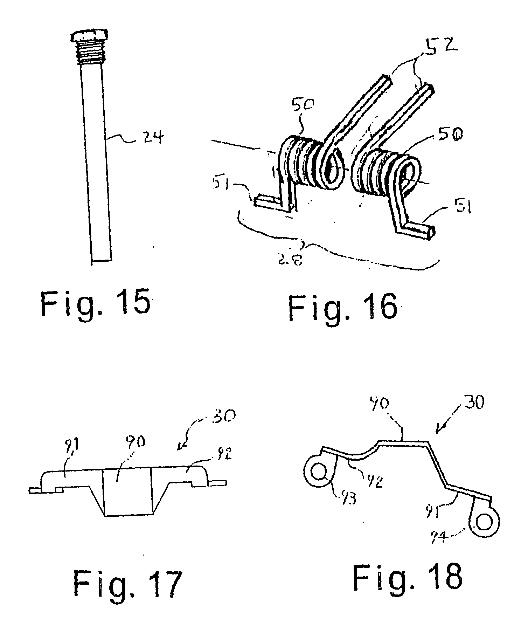

Referring now to Figures 17 and 18, each of the pedal body covers 30 basically includes a protective body portion 90, a first attachment leg 91 and a second attachment leg 92. The first and second attachment legs 91 and 92 have attachment holes 93 and 94, respectively, which are configured and dimensioned for receiving the pivot pins 24 therethrough. Thus, the four pedal body covers 30 are fixedly coupled to the pedal body 22 by the pivot pins 24. In other words, the first and second attachment legs 91 and 92 of the pedal body covers 30 are configured and dimensioned relative to the protective body portions 90 to be retained to the pedal body 22 by the pivot pins 24 which constitute front and rear fasteners.

Each of the pedal body covers 30 is a rigid member that is preferably made as a one-piece, unitary member from a material that is harder than the material of the pedal body 22 such as stainless steel. The pedal body 22 has four of the pedal body covers 30 with two of the pedal body covers 30 mounted on each side of the pedal body 22 in the cover receiving recesses 45. In particular, the pedal body covers 30 are located at the ends of the center tubular portion 41 in the area where the cleat A or B will rub against the pedal body 22 if the pedal body covers 30 were removed. In other words, the protective body portions 90 of the first and second pedal body covers 30 are configured and dimensioned to overlie the first and second areas located along the center section of the pedal body 22.

Moreover, the protective body portions 90 of a first pair of the pedal body covers 30 that are located on a first side of the center plane P1 each includes a section that lies in a first plane, while the first pair of the first and second attachment legs 91 and 92 of the first pair of the pedal body covers 30 have sections that includes the first and second holes 93 and 94 that lie in second and third planes that are substantially perpendicular to the first plane of the first pair of the protective body portions 90 of the pedal body covers 30. Likewise, the second pair of the pedal body covers 30 that are located on a second side of the center plane P1 each includes a section that lies in a fourth plane that is parallel to the first plane of the first pair of the pedal body covers 30 that are located on a first side of the center plane P1. The second pair of the first and second attachment legs 91 and 92 of the second pair of the pedal body covers 30 have sections that includes the first and second holes 93 and 94 that lie in fifth and sixth planes that are substantially perpendicular to the fourth plane of the second pair of the protective body portions 90 of the pedal body covers 30.

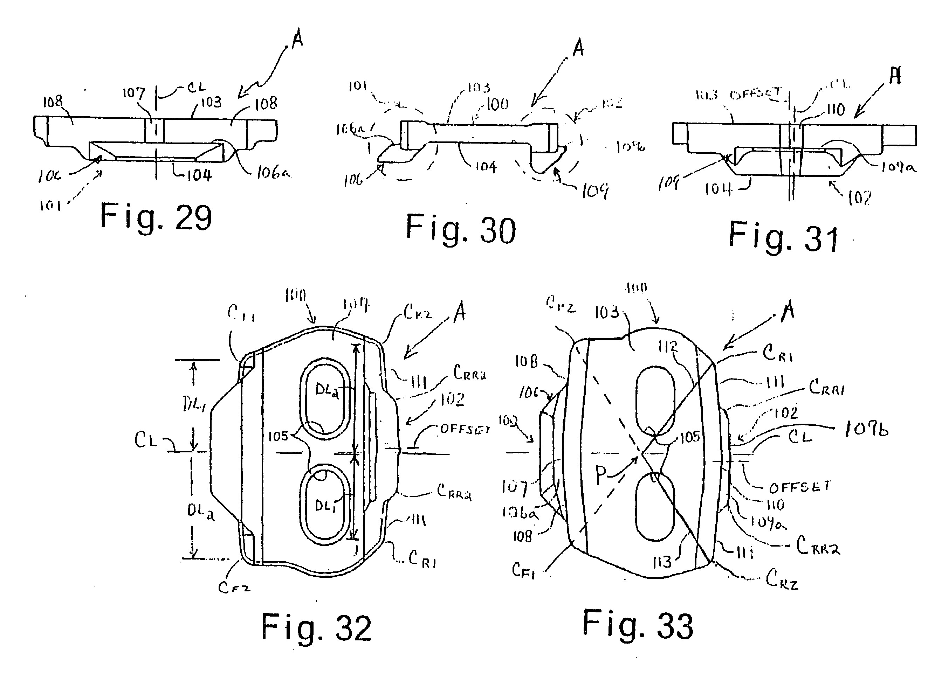

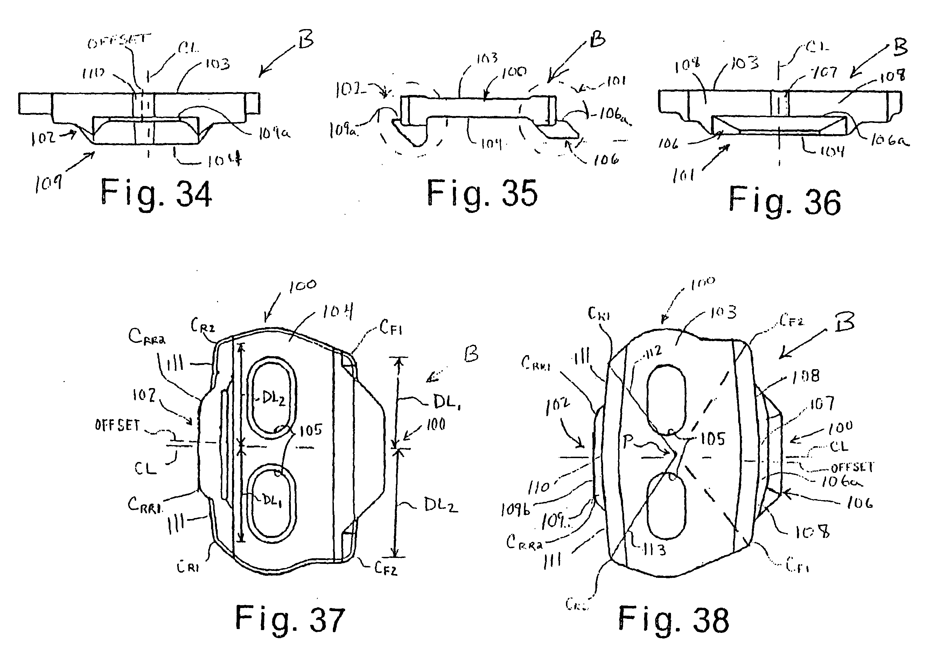

Referring now to Figures 29-38, the cleats A and B are basically mirror images of each other. It will be apparent to those skilled in the art from this disclosure that the descriptions of the portions of the cleat A (Figures 29-33) also to applies to the corresponding portions of the cleat B (Figures 34-38) and vice a versa. Thus, the same reference numerals will be used to describe both the portions of the cleat A and the corresponding portions of the cleat B for the sake of brevity.

Basically, each of the cleats A and B includes an attachment portion 100, a first or front coupling portion or member 101 extending from one end of the attachment portion 100 and a second or rear coupling portion or member 102 extending from the other end of the attachment portion 100. The front coupling portion or member 101 has a pair of lateral front corner abutments C_{F1} and C_{F2}, while the rear coupling portion or member 102 has a pair of lateral rear corner abutments C_{R1} and C_{R2}. The front corner abutments C_{F1} and C_{F2} selectively contact the front clamping member 23 when the cleat is pivoted about its pivot axis P of the cleat A or B, while the rear corner abutments C_{R1} and C_{R2} selectively contact the rear clamping member 25 when the cleat is pivoted about its pivot axis P of the cleat A or B. The pivot axis P is located at the intersection of a first line that extends between the front and rear corner abutments C_{F1} and C_{R1} and a second line that extends between the front and rear corner abutments C_{F2} and C_{R2} as seen in Figures 33 and 38. The pivot axis P also lies on a center line CL of the cleat A or B. As seen in Figures 32 and 37, the front and rear corner abutments C_{F1} and C_{R1} are spaced laterally from the center line CL of the cleat A or B by a first lateral distance DL₁, while the front and rear corner abutments C_{F2} and C_{R2} are spaced laterally from the center line CL of the cleat A or B by a second lateral distance DL₂ that is larger than the first lateral distance DL₁. This arrangement at least partially results in the low outward twisting force F1 and the high outward twisting force F2 for release the cleat A or B depending on which of the cleats A and B are used with which of the pedals 12a and 12b.

The attachment portion 100 has an upper sole side 103 facing in a first direction for engaging the sole of the shoe and a lower pedal side facing 104 in a second direction which is substantially opposite to the first direction. Preferably the attachment portion 100 and the coupling portions 101 and 102 are integrally formed together as a one-piece, unitary member, which is constructed from a suitable rigid material.

The attachment portion 100 has a pair of hole or slot 105 for receiving one or more fasteners for fixedly coupling to the sole of the cyclist's shoe in a relatively conventional manner. The interconnection of the cleat A to the sole is relatively well known in the art, and thus, this interconnection will not be discussed or illustrated in detail herein.

The front coupling portion 101 is designed to engage the front clamping member 23. The front coupling portion 101 has a nose portion or flange 106 with a first or front coupling surface 106a, a center front stop surface 107 and a pair of lateral front stop surfaces 108. The front coupling surface 106a faces towards the sole of the shoe, while the front stop surfaces 107 and 108 extend substantially perpendicular to the front coupling surface 106a. The center front stop surface 107 is designed to engage the front stop surface 65 of the front clamping member 23 to prevent forward movement of the cleats relative to the pedal body 22.

The center front stop surfaces 107 is arranged to extend perpendicular to a center line CL of the cleat A or B that divides the front coupling surface 106a into two equal side portions. The lateral front stop surfaces 108 are angled relative to the center front stop surfaces 107 so that they are inclined rearwardly as they extend outwardly from the center front stop surfaces 107. Preferably, the lateral front stop surfaces 108 are angled about five degrees relative to the center front stop surfaces 107. The lateral front stop surfaces 108 are designed to engage the front stop surface 65 of the front clamping member 23 when the cleat is pivoted about its pivot axis P of the cleat A or B. The lateral front stop surfaces 108 form the front lateral corner abutments C_{F1} and C_{F2} that are spaced from the center line CL of the cleat A or B. The front lateral corner abutment C_{F1} is spaced a shorter distance from the center line CL of the cleat A or B than the front lateral corner abutment C_{R2} from the center line CL of the cleat A or B. Thus, the rear lateral corner abutment C_{R1} forms a low force rear corner abutment, while the rear lateral corner abutment C_{R2} forms a high force rear corner abutment.

The second or rear coupling portion 102 extends from the second end of the attachment portion 100. The rear coupling portion 102 is designed to engage the rear clamping member 25. The rear coupling portion 102 has a nose portion or rear flange 109 and a center rear stop surface 110 and a pair of lateral rear stop surfaces 111. The nose portion or rear flange 109 includes a second or rear coupling surface 109a and a rear edge 109b extending perpendicularly relative to the rear coupling surface 109a. The rear edge 109b includes corners C_{RR1} and C_{RR2} that define the release points of the rear flange 109. In other words, when the cleat A or B is pivoted about its pivot axis P of the cleat A or B, the rear flange 109 will be twisted outwardly from underneath the rear clamping member 25. The cleat A or B will release from the rear clamping member 25 when one of the corners C_{RR1} and C_{RR2} of the rear flange 109 aligns with the rear stop surface 75 of the rear clamping member 25. In other words, when one of the corners C_{RR1} and C_{RR2} of the rear flange 109 can be seen from above, the rear flange of the cleat A or B releases from the rear stop surface 75 of the rear clamping member 25. The corner C_{RR1} is located on the same side of the center line CL as the rear lateral corner abutment C_{R1}, while the corner C_{RR2} is located on the same side of the center line CL as the rear lateral corner abutment C_{R2}. The rear flange 109 is shifted from the center line CL towards the rear lateral corner abutment C_{R2} by an OFFSET distance to control the release angle. Thus, the corners C_{RR1} and C_{RR2} of the rear flange 109 are symmetrically arranged about the OFFSET axis that is parallel to the center line CL. Preferably, in the preferred embodiment, the OFFSET distance is about 0.65 mm from the center line CL of the cleat A or B towards the rear lateral corner abutment C_{R2}. Preferably, this OFFSET distance is dimensioned together with the corners C_{RR1} and C_{RR2} of the rear flange 109 and the rear lateral corner abutments C_{R1} and C_{R2} such that the release angle (e.g., 15°) is substantially identical for each of the cleats A and B whether used with the left pedal 12a or the right pedal 12b.

The rear coupling surface 109a faces towards the sole of the shoe, while the rear stop surfaces 110 and 111 extend substantially perpendicular to the rear coupling surface 110. The rear stop surfaces 110 and 111 are designed to engage the stop surface 75 of the rear clamping member 25 to prevent rearward movement of the cleat A or B relative to the pedal body 22. Preferably, the coupling surfaces 106a and 109a are formed so as to lie in substantially the same plane.

The lateral rear stop surfaces 111 are angled relative to the center rear stop surface 110 so that they are inclined forwardly as they extend outwardly from the center rear stop surface 110. Preferably, the lateral rear stop surfaces 111 are angled about five degrees relative to the center rear stop surface 110. The lateral rear stop surfaces 111 are designed to engage the rear stop surface 75 of the rear clamping member 25 when the cleat A or B is pivoted about its pivot axis P of the cleat A or B.

The rear stop surfaces 110 and 111 are symmetrically arranged about an OFFSET that is spaced by 0.65 mm to one side of the cleat A or B from the center line CL of the cleat A or B. The lateral rear stop surfaces 111 form the rear lateral corner abutments C_{R1} and C_{R2} that are spaced from the center line CL of the cleat A or B. The rear lateral corner abutments C_{R1} and C_{R2} form effective lever arms 112 and 113, respectively, i.e., the length from pivot axis P of the cleat A or B to the lateral corner abutments C_{R1} and C_{R2}. The lever arm 112 is shorter than the lever arm 113. The lateral corner abutment C_{R1} is spaced a shorter distance from the center line CL of the cleat A or B than the lateral corner abutment C_{R2} from the center line CL of the cleat A or B. Thus, when the lateral corner abutment C_{R1} engages the rear stop surface 75 of the rear clamping member 25 upon the application of an outward twisting force, the cleat A or B easier to pivot to the release position than the lateral corner abutment C_{R2} engages the rear stop surface 75 of the rear clamping member 25.

One preferred assembly operation of the bicycle pedals 12a and 12b will now be discussed. The bicycle pedals 12a and 12b are assembled by initially installing the front and rear clamping members 23 and 25 to the bicycle pedal body 22 by the pivot pins 24. This is done by positioning the front and rear clamping members 23 and 25 between the side mounting portions 42 and 43. Next, the four pedal body covers 30 are mounted in the cover receiving recesses 45. Thus, first and second attachment legs 91 and 92 of the four pedal body covers 30 have their attachment holes 93 and 94 arranged for receiving the pivot pins 24 therethrough. Now, the biasing members 28 are held in place between the front and rear clamping members 23 and 25. The pivot pins 24 are now installed in the pedal body 22 such that the front and rear clamping members 23 and 25, the biasing members 28 and the pedal body covers 30 are mounted on the pivot pins 24. Thus, the pedal body covers 30 are fixedly coupled to the pedal body 22 by the pivot pins 24, while the front and rear clamping members 23 and 25 are pivotally coupled to the pedal body 22 by the pivot pins 24. In this state the biasing members 28 are not in their fully preloaded state. Thus, the springs of the biasing members 28 are now wound about the pivot pins 24 and the spring holders 26 are insert into openings of the rear clamping members 25 to properly preload the biasing members 28, which urge the front and rear clamping members 23 and 25 to their rest positions. This arrangement allows the biasing members 28 to be initially installed in unload or load loaded state for easy assembly. In other words, the front and rear clamping members 23 and 25 and the biasing members 28 can be installed on the bicycle pedal body 22 without having to preloaded the biasing members 28 under high tension.

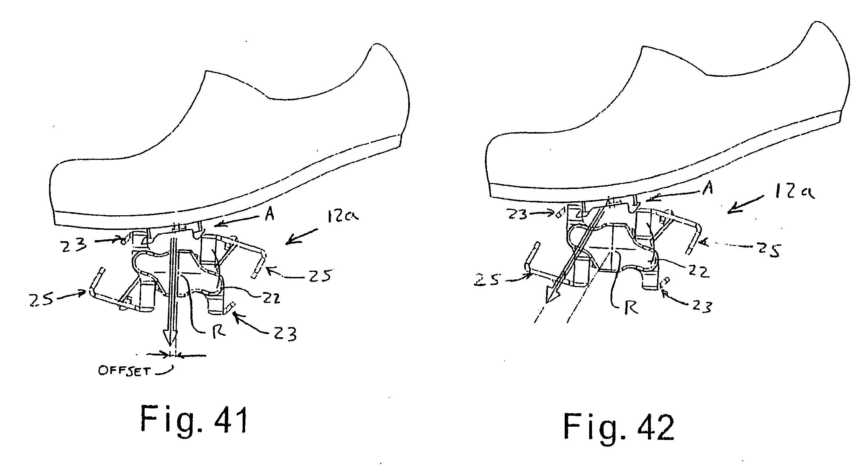

Operation of the bicycle pedal 12b will now be briefly described with reference mainly to Figures 39-40. Due to the unique construction of the bicycle pedals 12a and 12b, the rider can easily rotate the pedal 12a or 12b from a non-horizontal position as seen in Figures 39 and 40 to a substantially horizontal position as seen Figures 41 and 42. When a bicycle shoe is to be attached to one of the bicycle pedal 12a, the rider can rotate the pedal 12a from the non-horizontal position shown in Figure 39 to a substantially horizontal position as seen Figures 41 and 42, by rotating the bicycle pedal 12a in a counter clockwise direction. Because the front and rear clamping members 23 and 25 are configured and arranged to create long horizontal sides and short vertical ends and because the rear clamping members 25 are offset from the axis R, the rider can easily rotate the pedal 12a. Moreover, when the pedal 12a is in the non-horizontal position shown in Figure 40, the rider can easily rotate the pedal 12a in either direction.

Once the pedal 12a is in a substantially horizontal position as seen Figures 41 and 42, the rider moves the tip of the shoe forward towards one of the front clamping members 23 so that the tip of the cleat A or B is inserted underneath one of the front clamping members 23. Once the tip of the cleats A and B has been inserted underneath one of the front clamping members 23, a downwardly directed force is applied by the shoe, such that the shoe is pushed down toward the bicycle pedal body 22. When the shoe is pressed down further from this state shown in Figures 41 and 42, the rear end of the cleat A or B rotates one of the rear clamping members 25 backward against the biasing force of one of the biasing members 28. Simultaneously, the front end of the cleat A or B rotates the front clamping member 25 forward against the biasing force of the other one of the biasing members 28. The cleat A or B then slides between the front and rear clamping member 23 and 25. Once the cleat A or B has slid between the front and rear clamping member 23 and 25, the front and rear clamping member 23 and 25 are biased by the biasing members 28 back to their original positions. As a result, the cleat A or B is engaged between the front and rear clamping member 23 and 25 (see Figure 2).

When the shoe is to be removed from the bicycle pedal 12a or 12b, the heel portion of the shoe is lightly twisted to the outside about the pivot axis P. This twisting motion will cause the front and rear clamping member 23 and 25 to rotate against the energizing forces of the biasing members 28, and the engagement of the rear end of the cleat A or B will be released instantly. Depending on which of the cleats A and B are used with which pedal will determine the release force F1 orF2 that is necessary to rotate the cleats A and B to their release positions.

As used herein, the following directional terms "forward, rearward, above, downward, vertical, horizontal, below and transverse" as well as any other similar directional terms refer to those directions of a bicycle equipped with a pedal of the present invention and when the pedal is horizontally oriented relative to the ground. Accordingly, these terms, as utilized to describe the present invention should be interpreted relative to a bicycle equipped with a pedal of the present invention.

The terms of degree such as "substantially", "about" and "approximately" as used herein mean a reasonable amount of deviation of the modified term such that the end result is not significantly changed. These terms should be construed as including a deviation of at least ± 5-10% of the modified term if this deviation would not negate the meaning of the word it modifies.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims.

## Claims

1. A bicycle pedal (12a, 12b) comprising:
a pedal shaft (21) having a center rotational axis (R);
a pedal body (22) rotatably coupled to the pedal shaft (21) about the center rotational axis (R) of the pedal shaft (21), the pedal body (22) having a first end and a second end with a center plane (P1) extending between the first and second ends and passing through the center rotational axis (R) of the pedal shaft (21);
a front clamping member (23) coupled to the first end of the pedal body (22), the front clamping member (23) having a front cleat engagement surface (64) facing towards the center plane (P1) of the pedal body (22) and a front cleat stop surface (65); and
a rear clamping member (25) coupled to the second end of the pedal body (22), the rear clamping member (25) having a rear cleat engagement surface (74) facing towards the center plane (P1) of the pedal body (22) and a rear cleat stop surface (75) spaced rearwardly from the front cleat stop surface (65) by a first predetermined distance (S1),
**characterized in that**
the rear clamping member (25) has an elongated tongue extending in a substantially rearward direction past the second end of the pedal body (22) by a second predetermined distance (S2) that is at least substantially equal to or greater than the first predetermined distance (S1).

2. The bicycle pedal (12a, 12b) according to claim 1, wherein
the elongated tongue has a generally horizontal section (77) and a generally vertical portion (78) that form a generally L-shape as viewed from a longitudinal side of the pedal body (22).

3. The bicycle pedal (12a, 12b) according to claim 2, wherein
the generally horizontal section (77) is angled downwardly from the rear cleat engagement surface (74) towards the center plane (P1).

4. The bicycle pedal (12a, 12b) according to any of the preceding claims, wherein
the rear clamping member (25) is pivotally coupled to the pedal body (22) to move between the cleat engaged position to the cleat released position.

5. The bicycle pedal (12a, 12b) according to any of the preceding claims, wherein
the front clamping member (23) is pivotally coupled to the first end of the pedal body (22) to pivot in a generally forward direction through a first predetermined angle; and
a rear clamping member (25) is pivotally coupled to the second end of the pedal body (22) to pivot in a generally rearward direction through a second predetermined angle that is larger than the first predetermined angle.

6. The bicycle pedal (12a, 12b) according to any of the preceding claims, wherein
the front cleat stop surface (65) is spaced forwardly from the center rotational axis (R) of the pedal shaft (21) by a first offset distance (d1) measured perpendicular to the front cleat stop surface (65); and
the rear cleat stop surface (75) is spaced rearwardly from the center rotational axis (R) of the pedal shaft (21) by a second offset distance (d2) measured perpendicular to the rear cleat stop surface (75), the second offset distance (d2) being smaller than the first offset distance (d1).

7. The bicycle pedal (12a, 12b) according to any of the preceding claims, wherein
the front clamping member (23) is pivotally coupled to the first end of the pedal body (22) about a first pivot axis to pivot in a generally forward direction with the front cleat engagement surface (64) being radially spaced from the first pivot axis by a first lever distance (L1); and
the rear clamping member (25) is pivotally coupled to the second end of the pedal body (22) about a second pivot axis to pivot in a generally rearward direction with the rear cleat engagement surface (74) being radially spaced from the second pivot axis by a second lever distance (L2) that is larger than the first lever distance (L1).

8. The bicycle pedal (12a, 12b) according to any of the preceding claims, wherein
the pedal body (22) has an opposite side front clamping member coupled to the second end of the pedal body (22), and an opposite side rear clamping member coupled to the first end of the pedal body (22), the opposite side rear clamping member having an elongated tongue extending in a substantially forward direction past the first end of the pedal body (22) by the second predetermined distance (d2).

9. The bicycle pedal (12a, 12b) according to claim 8, wherein
the front clamping member (23) and the opposite side rear clamping member are pivotally coupled to the first end of the pedal body (22) about a first pivot axis; and the rear clamping member (25) and the opposite side front clamping member are pivotally coupled to the second end of the pedal body (22) about a second pivot axis to pivot.

10. The bicycle pedal (12a, 12b) according to claim 8 or 9, wherein
each of the elongated tongues of the rear clamping member (25) and the opposite side rear clamping member has a generally horizontal section and a generally vertical portion that form a generally L-shape as viewed from a longitudinal side of the pedal body (22).

11. The bicycle pedal (12a, 12b) according to any of claims 8 to 10, wherein
the opposite side front clamping member has an opposite side front cleat engagement surface facing towards the center plane of the pedal body (22) from a second side of the center plane (P1) and an opposite side front cleat stop surface; and
the opposite side rear clamping member has an opposite side rear cleat engagement surface facing towards the center plane (P1) of the pedal body (22) from the second side of the center plane (P1) and an opposite side rear cleat stop surface,
the front cleat engagement surface (64) is radially spaced from the first pivot axis by a first lever distance,
the opposite side front cleat engagement surface is radially spaced from the second pivot axis by the first lever distance,
the rear cleat engagement surface (74) is radially spaced from the second pivot axis by a second lever distance,
the opposite side rear cleat engagement surface is radially spaced from the first pivot axis by the second lever distance where the second lever distances are larger than the first lever distances.

12. The bicycle pedal (12a, 12b) according to claim 11, wherein
the front and rear cleat engagement surfaces (64, 74) lie substantially in a first single plane, and the opposite side front and rear cleat engagement surfaces lie substantially in a second single plane.

13. The bicycle pedal (12a, 12b) according to claim 10, wherein
the front cleat stop surface (65) is spaced forwardly from the center rotational axis (R) of the pedal shaft (21) by the first offset distance (d1) measured perpendicular to the front cleat stop surface (65);
the opposite side front cleat stop surface is spaced from the center rotational axis (R) of the pedal shaft (21) by the first offset distance (d1) measured perpendicular to the opposite side front cleat stop surface;
the rear cleat stop surface (75) is spaced rearwardly from the center rotational axis (R) of the pedal shaft (21) by the second offset distance (d2) measured perpendicular to the rear cleat stop surface (75); and
the opposite side rear cleat stop surface is spaced from the center rotational axis (R) of the pedal shaft (21) by the second offset distance (d2) measured perpendicular to the opposite side rear cleat stop surface, the second offset distances (d2) being smaller than the first offset distances (d1).

14. The bicycle pedal (12a, 12b) according to claim 1, wherein
the front clamping member (23) is pivotally coupled to the first end of the pedal body (22) about a first pivot axis to pivot in a generally forward direction through a first predetermined angle, and
the rear clamping member (25) is pivotally coupled to the second end of the pedal body (22) about a second pivot axis to pivot in a generally rearward direction through a second predetermined angle that is larger than the first predetermined angle.

15. The bicycle pedal (12a, 12b) according to any of claims 14 to 16, wherein
the pedal body (22) has a first one of a biasing member (28) operatively coupled between the front clamping member (23) and the pedal body (22) to urge the front clamping member (23) to a front cleat engaging position, and
the pedal body (22) has a second one of a biasing member (28) operatively coupled between the rear clamping member (25) and the pedal body (22) to urge the rear clamping member (25) to a rear cleat engaging position.

16. The bicycle pedal (12a, 12b) according to claim 8, wherein
the opposite side front clamping member is pivotally coupled to the second end of the pedal body (22) to pivot through a smaller angle than the opposite side rear clamping member.

17. The bicycle pedal (12a, 12b) according to claim 16, wherein
the first one of a biasing member (28) is coupled between the front clamping member (23) and the opposite side rear clamping member to urge the front clamping member (23) and the opposite side rear clamping member to cleat engaging positions, and
the pedal body (22) has a second biasing member operatively coupled between the rear clamping member (25) and the opposite side front clamping member to urge the rear clamping member (25) and the opposite side front clamping member to cleat engaging positions.

18. The bicycle pedal (12a, 12b) according to claim 17, wherein
the first one of a biasing member (28) includes at least one first torsion spring with a coiled portion located on a first pivot pin, a first end of the first torsion spring contacting the front clamping member (23) and a second end of the first torsion spring contacting the opposite side rear clamping member, and
the second one of a biasing member (28) includes at least one second torsion spring with a coiled portion located on a second pivot pin, a first end of the second torsion spring contacting the rear clamping member (25) and a second end of the second torsion spring contacting the opposite side front clamping member.

19. The bicycle pedal (12a, 12b) according to claim 18 and any of claims 11 to 13, wherein
the first pivot pin pivotally couples the front clamping member (23) and the opposite side rear clamping member to the pedal body (22), and
the second pivot pin pivotally couples the rear clamping member (25) and the opposite side front clamping member to the pedal body (22).

## Patentansprüche

1. Fahrradpedal (12a, 12b), aufweisend:
eine Pedalachse (21), die eine Mitteldrehachse (R) aufweist;
einen Pedalkörper (22), der mit der Pedalachse (21) um die Mitteldrehachse (R) der Pedalachse (21) drehbar verbunden ist, wobei der Pedalkörper (22) ein erstes Ende und ein zweites Ende aufweist, wobei sich eine Mittelebene (P1) zwischen den ersten und zweiten Enden erstreckt und durch die Mitteldrehachse (R) der Pedalachse (21) verläuft;
ein vorderes Einspannelement (23), das mit dem ersten Ende des Pedalkörpers (22) verbunden ist, wobei das vordere Einspannelement (23) eine vordere Stolleneingreiffläche (64), die zur Mittelebene (P1) des Pedalkörpers (22) weist, und eine vordere Stollenanschlagfläche (65) aufweist; und
ein hinteres Einspannelement (25), das mit dem zweiten Ende des Pedalkörpers (22) verbunden ist, wobei das hintere Einspannelement (25) eine hintere Stolleneingreiffläche (74), die zur Mittelebene (P1) des Pedalkörpers (22) weist, und eine hintere Stollenanschlagfläche (75) aufweist, die von der vorderen Stollenanschlagfläche (65) in Richtung nach hinten mit einem ersten vorbestimmten Abstand (S1) angeordnet ist,
**dadurch gekennzeichnet, dass**
das hintere Einspannelement (25) eine längliche Zunge aufweist, die sich in einer im Wesentlichen nach hinten verlaufenden Richtung am zweiten Ende des Pedalkörpers (22) vorbei um eine zweite vorbestimmte Strecke (S2) erstreckt, die im Wesentlichen gleich groß oder größer als der erste vorbestimmte Abstand (S1) ist.

2. Fahrradpedal (12a, 12b) nach Anspruch 1, bei dem
die längliche Zunge ein im Wesentlichen horizontales Teilstück (77) und einen im Wesentlichen vertikalen Abschnitt (78) aufweist, die im Wesentlichen eine L-Form bilden, bei Betrachtung von einer Längsseite des Pedalkörpers (22) her.

3. Fahrradpedal (12a, 12b) nach Anspruch 2, bei dem
das im Wesentlichen horizontale Teilstück (77) von der hinteren Stolleneingreiffläche (74) zur Mittelebene (P1) hin nach unten abgewinkelt ist.

4. Fahrradpedal (12a, 12b) nach einem der vorhergehenden Ansprüche, bei dem
das hintere Einspannelement (25) mit dem Pedalkörper (22) schwenkbar verbunden ist, um sich zwischen der Stolleneingreifposition und der Stollenfreigabeposition zu bewegen.

5. Fahrradpedal (12a, 12b) nach einem der vorhergehenden Ansprüche, bei dem
das vordere Einspannelement (23) mit dem ersten Ende des Pedalkörpers (22) schwenkbar verbunden ist, um im Wesentlichen in Richtung nach vorne um einen ersten vorbestimmten Winkel zu schwenken; und
ein hinteres Einspannelement (25) mit dem zweiten Ende des Pedalkörpers (22) schwenkbar verbunden ist, um im Wesentlichen in Richtung nach hinten um einen zweiten vorbestimmten Winkel zu schwenken, der größer als der erste vorbestimmte Winkel ist.

6. Fahrradpedal (12a, 12b) nach einem der vorhergehenden Ansprüche, bei dem
die vordere Stollenanschlagfläche (65) von der Mitteldrehachse (R) der Pedalachse (21) um einen ersten Versetzungsabstand (d1) nach vorne hin beabstandet angeordnet ist, und zwar gemessen senkrecht zur vorderen Stollenanschlagfläche (65); und
die hintere Stollenanschlagfläche (75) von der Mitteldrehachse (R) der Pedalachse (21) um einen zweiten Versetzungsabstand (d2) nach hinten beabstandet angeordnet ist, und zwar gemessen senkrecht zur hinteren Stollenanschlagfläche (75), wobei der zweite Versetzungsabstand (d2) kleiner als der erste Versetzungsabstand (d1) ist.

7. Fahrradpedal (12a, 12b) nach einem der vorhergehenden Ansprüche, bei dem das vordere Einspannelement (23) mit dem ersten Ende des Pedalkörpers (22) um eine erste Schwenkachse schwenkbar verbunden ist, um im Wesentlichen in Richtung nach vorne zu schwenken, wobei die vordere Stolleneingreiffläche (64) von der ersten Schwenkachse um eine erste Hebelstrecke (L1) beabstandet angeordnet ist; und
das hintere Einspannelement (25) mit dem zweiten Ende des Pedalkörpers (22) um eine zweite Schwenkachse schwenkbar verbunden ist, um im Wesentlichen in Richtung nach hinten zu schwenken, wobei die hintere Stolleneingreiffläche (74) von der zweiten Schwenkachse um eine zweite Hebelstrecke (L2) in radialer Richtung beabstandet angeordnet ist, die größer als die erste Hebelstrecke (L1) ist.

8. Fahrradpedal (12a, 12b) nach einem der vorhergehenden Ansprüche, bei dem der Pedalkörper (22) ein an der entgegengesetzten Seite befindliches vorderes Einspannelement aufweist, das mit dem zweiten Ende des Pedalkörpers (22) verbunden ist, und ein an der entgegengesetzten Seite befindliches hinteres Einspannelement, das mit dem ersten Ende des Pedalkörpers (22) verbunden ist, wobei das an der entgegengesetzten Seite befindliche hintere Einspannelement eine längliche Zunge aufweist, die sich im Wesentlichen in Vorwärtsrichtung um den zweiten vorbestimmten Abstand (d2) bis hinter das erste Ende des Pedalkörpers (22) erstreckt.

9. Fahrradpedal (12a, 12b) nach Anspruch 8, bei dem
das vordere Einspannelement (23) und das an der entgegengesetzten Seite befindliche hintere Einspannelement mit dem ersten Ende des Pedalkörpers (22) um eine erste Schwenkachse schwenkbar verbunden sind; und
das hintere Einspannelement (25) und das an der entgegengesetzten Seite befindliche vordere Einspannelement mit dem zweiten Ende des Pedalkörpers (22) um eine zweite Schwenkachse schwenkbar verbunden sind, um zu schwenken.

10. Fahrradpedal (12a, 12b) nach Anspruch 8 oder 9, bei dem
jede der länglichen Zungen des hinteren Einspannelementes (25) und des an der entgegengesetzten Seite befindlichen hinteren Einspannelementes ein im Wesentlichen horizontales Teilstück und ein im Wesentlichen vertikales Teilstück aufweist, die im Wesentlichen eine L-Form bilden, gesehen von einer Längsseite des Pedalkörpers (22) her.

11. Fahrradpedal (12a, 12b) nach einem der Ansprüche 8 bis 10, bei dem das an der entgegengesetzten Seite befindliche vordere Einspannelement eine an einer entgegengesetzten Seite befindliche vordere Stolleneingreiffläche, die von einer zweiten Seite der Mittelebene (P1) zu einer Mittelebene des Pedalkörpers (22) weist, und eine an der entgegengesetzten Seite befindliche vordere Stollenanschlagfläche aufweist; und
das an der entgegengesetzten Seite befindliche hintere Einspannelement eine an einer entgegengesetzten Seite befindliche hintere Stolleneingreiffläche, die von der zweiten Seite der Mittelebene (P1) zur Mittelebene (P1) des Pedalkörpers (22) weist, und eine an der entgegengesetzten Seite befindliche hintere Stollenanschlagfläche aufweist;
die vordere Stolleneingreiffläche (64) von der ersten Schwenkachse um eine erste Hebelstrecke in radialer Richtung beabstandet ist,
die an der entgegengesetzten Seite befindliche vordere Stolleneingreiffläche von der zweiten Schwenkachse um die erste Hebelstrecke in radialer Richtung beabstandet ist,
die hintere Stolleneingreiffläche (74) von der zweiten Schwenkachse um eine zweite Hebelstrecke in radialer Richtung beabstandet ist,
die an der entgegengesetzten Seite befindliche hintere Stolleneingreiffläche von der ersten Schwenkachse um die zweite Hebelstrecke in radialer Richtung beabstandet ist, wobei die zweiten Hebelstrecken größer als die ersten Hebelstrecken sind.

12. Fahrradpedal (12a, 12b) nach Anspruch 11, bei dem
die vorderen und hinteren Stolleneingreifflächen (64, 74) im Wesentlichen in einer ersten einzelnen Ebene liegen, und die an der entgegengesetzten Seite befindlichen vorderen und hinteren Stolleneingreifflächen im Wesentlichen in einer zweiten einzelnen Ebene liegen.

13. Fahrradpedal (12a, 12b) nach Anspruch 10, bei dem
die vordere Stollenanschlagfläche (65) von der Mitteldrehachse (R) der Pedalachse (21) um einen ersten Versetzungsabstand (d1) nach vorne hin beabstandet angeordnet ist, und zwar gemessen senkrecht zur vorderen Stollenanschlagfläche (65);
die an der entgegengesetzten Seite befindliche vordere Stollenanschlagfläche von der Mittelrotationsachse (R) der Pedalachse (21) um den ersten Versetzungsabstand (d1) beabstandet ist, gemessen senkrecht zu der an der entgegengesetzten Seite befindlichen vorderen Stollenanschlagfläche;
die hintere Stollenanschlagfläche (75) von der Mitteldrehachse (R) der Pedalachse (21) um einen zweiten Versetzungsabstand (d2) nach hinten beabstandet angeordnet ist, und zwar gemessen senkrecht zur hinteren Stollenanschlagfläche (75); und
die an der entgegengesetzten Seite befindliche hintere Stollenanschlagfläche von der Mittelrotationsachse (R) der Pedalachse (21) um den zweiten Versetzungsabstand (d2) beabstandet ist, gemessen senkrecht zu der an der entgegengesetzten Seite befindlichen hinteren Stollenanschlagfläche, wobei der zweite Versetzungsabstand (d2) kleiner als der erste Versetzungsabstand (d1) ist.

14. Fahrradpedal (12a, 12b) nach Anspruch 1, bei dem
das vordere Einspannelement (23) mit dem ersten Ende des Pedalkörpers (22) um eine erste Schwenkachse schwenkbar verbunden ist, um im Wesentlichen in Richtung nach vorne um einen ersten vorbestimmten Winkel zu schwenken; und
das hintere Einspannelement (25) mit dem zweiten Ende des Pedalkörpers (22) um eine zweite Schwenkachse schwenkbar verbunden ist, um im Wesentlichen in Richtung nach hinten um einen zweiten vorbestimmten Winkel zu schwenken, der größer als der erste vorbestimmte Winkel ist.

15. Fahrradpedal (12a, 12b) nach einem der Ansprüche 14 bis 16, bei dem
der Pedalkörper (22) ein erstes von einem Vorspannelement (28) aufweist, das zwischen dem vorderen Einspannelement (23) und dem Pedalkörper (22) funktionsmäßig verbunden ist, um das vordere Einspannelement (23) zu einer vorderen Stolleneingreifposition vorzuspannen, und
der Pedalkörper (22) ein zweites von einem Vorspannelement (28) aufweist, das zwischen dem hinteren Einspannelement(25) und dem Pedalkörper (22) funktionsmäßig verbunden ist, um das hintere Einspannelement (25) zu einer hinteren Stolleneingreifposition vorzuspannen.

16. Pedalkörper (12a, 12b) nach Anspruch 8, bei dem
das an der entgegengesetzten Seite befindliche vordere Einspannelement mit dem zweiten Ende des Pedalkörpers (22) schwenkbar verbunden ist, um um einen kleineren Winkel als das an der entgegengesetzten Seite befindliche hintere Einspannelement zu schwenken.

17. Fahrradpedal (12a, 12b) nach Anspruch 16, bei dem
das erste von einem Einspannelement(28) zwischen dem vorderen Einspannelement (23) und dem an der entgegengesetzten Seite hinteren Einspannelement verbunden ist, um das vordere Einspannelement (23) und das an der entgegengesetzten Seite befindliche hintere Einspannelement in Stolleneingreifpositionen vorzuspannen, und
der Pedalkörper (22) ein zweites Vorspannelement aufweist, das zwischen dem hinteren Einspannelement (25) und dem an der entgegengesetzten Seite befindlichen vorderen Einspannelement verbunden ist, um das hintere Einspannelement (25) und das an der entgegengesetzten Seite befindliche vordere Einspannelement in Stolleneingreifpositionen vorzuspannen.

18. Fahrradpedal (12a, 12b) nach Anspruch 17, bei dem
das erste von einem Vorspannelement (28) mindestens eine erste Torsionsfeder mit einem an einem ersten Schwenkstift befindlichen gewendelten Abschnitt beinhaltet, ein erstes Ende der ersten Torsionsfeder mit dem vorderen Einspannelement (23) in Kontakt ist und ein zweites Ende der ersten Torsionsfeder mit dem an der entgegengesetzten Seite angeordneten hinteren Einspannelement in Kontakt ist, und
das zweite von einem Vorspannelement (28) mindestens eine zweite Torsionsfeder mit einem an einem zweiten Schwenkstift befindlichen gewendelten Abschnitt beinhaltet, ein erstes Ende der zweiten Torsionsfeder mit dem hinteren Einspannelement (25) in Kontakt ist und ein zweites Ende der zweiten Torsionsfeder mit dem an der entgegengesetzten Seite angeordneten vorderen Einspannelement in Kontakt ist.

19. Fahrradpedal (12a, 12b) nach Anspruch 18 und einem der Ansprüche 11 bis 13, bei dem
der erste Schwenkstift das vordere Einspannelement (23) und das an der entgegengesetzten Seite befindliche hintere Einspannelement mit dem Pedalkörper (22) schwenkbar verbindet, und
der zweite Schwenkstift das hintere Einspannelement (25) und das an der entgegengesetzten Seite befindliche vordere Einspannelement mit dem Pedalkörper (22) schwenkbar verbindet.

## Revendications

1. Pédale de bicyclette (12a, 12b) comprenant :
une tige de pédale (21) ayant un axe de rotation central (R) ;
un corps de pédale (22) couplé de manière rotative à la tige de pédale (21) autour d'un axe de rotation central (R) de la tige de pédale (21), le corps de pédale (22) ayant une première extrémité et une seconde extrémité avec un plan central (P1) s'étendant entre les première et seconde extrémités et passant par l'axe de rotation central (R) de la tige de pédale (21) ;
un élément de serrage avant (23) couplé à la première extrémité du corps de pédale (22), l'élément de serrage avant (23) ayant une surface de mise en prise de cale avant (64) orientée vers le plan central (P1) du corps de pédale (22) et une surface de butée de cale avant (65) ; et
un élément de serrage arrière (25) couplé à la seconde extrémité du corps de pédale (22), l'élément de serrage arrière (25) ayant une surface de mise en prise de cale arrière (74) orientée vers le plan central (P1) du corps de pédale (22) et une surface de butée de cale arrière (75) espacée vers l'arrière par rapport à la surface de butée de cale avant (65) selon une première distance prédéterminée (S1),
**caractérisée en ce que** :
l'élément de serrage arrière (25) a une languette allongée s'étendant dans une direction sensiblement vers l'arrière au-delà de la seconde extrémité du corps de pédale (22) selon une seconde distance prédéterminée (S2) qui est au moins sensiblement identique ou supérieure à la première distance prédéterminée (S1).

2. Pédale de bicyclette (12a, 12b) selon la revendication 1, dans laquelle:
la languette allongée a une section généralement horizontale (77) et une partie généralement verticale (78) qui forment une forme généralement en L telle qu'observée à partir d'un côté longitudinal du corps de pédale (22).

3. Pédale de bicyclette (12a, 12b) selon la revendication 2, dans laquelle la section généralement horizontale (77) est coudée vers le bas à partir de la surface de mise en prise de cale arrière (74) vers le plan central (P1).

4. Pédale de bicyclette (12a, 12b) selon l'une quelconque des revendications précédentes, dans laquelle l'élément de serrage arrière (25) est couplé de manière pivotante au corps de pédale (22) pour se déplacer entre la position mise en prise de cale à la position débloquée de cale.

5. Pédale de bicyclette (12a, 12b) selon l'une quelconque des revendications précédentes, dans laquelle l'élément de serrage avant (23) est couplé de manière pivotante à la première extrémité du corps de pédale (22) pour pivoter dans une direction généralement vers l'avant selon un premier angle prédéterminé ; et
un élément de serrage arrière (25) est couplé de manière pivotante à la seconde extrémité du corps de pédale (22) pour pivoter dans une direction généralement vers l'arrière selon un second angle prédéterminé qui est supérieur au premier angle prédéterminé.

6. Pédale de bicyclette (12a, 12b) selon l'une quelconque des revendications précédentes, dans laquelle la surface de butée de cale avant (65) est espacée vers l'avant de l'axe de rotation central (R) de la tige de pédale (21) par une première distance décalée (d1) mesurée perpendiculairement à la surface de butée de cale avant (65) ; et
la surface de butée de cale arrière (75) est espacée vers l'arrière de l'axe de rotation central (R) de la tige de pédale (21) par une seconde distance décalée (d2) mesurée perpendiculairement à la surface de butée de cale arrière (75), la seconde distance décalée (d2) étant inférieure à la première distance décalée (d1).

7. Pédale de bicyclette (12a, 12b) selon l'une quelconque des revendications précédentes, dans laquelle l'élément de serrage avant (23) est couplé de manière pivotante à la première extrémité du corps de pédale (22) autour d'un premier axe de pivot pour pivoter dans une direction généralement vers l'avant avec la surface de mise en prise de cale avant (64) qui est espacée radialement du premier axe de pivot selon une première distance de levier (L1) ; et
l'élément de serrage arrière (25) est couplé de manière pivotante à la seconde extrémité du corps de pédale (22) autour d'un second axe de pivot pour pivoter dans une direction généralement vers l'arrière avec la surface de mise en prise de cale arrière (74) qui est radialement espacée du second axe de pivot par une seconde distance de levier (L2) qui est supérieure à la première distance de levier (L1).

8. Pédale de bicyclette (12a, 12b) selon l'une quelconque des revendications précédentes, dans laquelle le corps de pédale (22) a un élément de serrage avant du côté opposé couplé à la seconde extrémité du corps de pédale (22), et un élément de serrage arrière du côté opposé couplé à la première extrémité du corps de pédale (22), l'élément de serrage arrière du côté opposé ayant une languette allongée s'étendant dans une direction sensiblement vers l'avant au-delà de la première extrémité du corps de pédale (22) selon une seconde distance prédéterminée (d2).

9. Pédale de bicyclette (12a, 12b) selon la revendication 8, dans laquelle l'élément de serrage avant (23) et l'élément de serrage arrière du côté opposé sont couplés de manière pivotante à la première extrémité du corps de pédale (22) autour d'un premier axe de pivot ; et
l'élément de serrage arrière (25) et l'élément de serrage avant du côté opposé sont couplés de manière pivotante à la seconde extrémité du corps de pédale (22) autour d'un second axe de pivot pour pivoter.

10. Pédale de bicyclette (12a, 12b) selon la revendication 8 ou 9, dans laquelle chacune des languettes allongées de l'élément de serrage arrière (25) et de l'élément de serrage arrière du côté opposé a une section généralement horizontale et une partie généralement verticale qui forment une forme généralement en L telle qu'observée à partir d'un côté longitudinal du corps de pédale (22).

11. Pédale de bicyclette (12a, 12b) selon l'une quelconque des revendications 8 à 10, dans laquelle l'élément de serrage avant du côté opposé a une surface de mise en prise de cale avant du côté opposé orientée vers le plan central du corps de pédale (22) à partir d'un second côté du plan central (P1) et une surface de butée de cale avant du côté opposé ; et
l'élément de serrage arrière du côté opposé a une surface de mise en prise de cale arrière du côté opposé orientée vers le plan central (P1) du corps de pédale (22) à partir du second côté du plan central (P1) et une surface de butée de cale arrière du côté opposé,
la surface de mise en prise de cale avant (64) est radialement espacée du premier axe de pivot par une première distance de levier ;
la surface de mise en prise de cale avant du côté opposé est espacée radialement du second axe de pivot par une première distance de levier,
la surface de mise en prise de cale arrière (74) est radialement espacée du second axe de pivot par une seconde distance de levier,
la surface de mise en prise de cale arrière du côté opposé est radialement espacée du premier axe de pivot par une seconde distance de levier où les secondes distances de levier sont supérieures aux premières distances de levier.

12. Pédale de bicyclette (12a, 12b) selon la revendication 11, dans laquelle:
les surfaces de mise en prise de cale avant et arrière (64, 74) se trouvent sensiblement dans un premier plan unique, et les surfaces de mise en prise de cale avant et arrière du côté opposé se trouvent sensiblement dans un second plan unique.

13. Pédale de bicyclette (12a, 12b) selon la revendication 10, dans laquelle :
la surface de butée de cale avant (65) est espacée vers l'avant de l'axe de rotation central (R) de la tige de pédale (21) par une première distance décalée (d1) mesurée perpendiculairement à la surface de butée de cale avant (65) ;
la surface de butée de cale avant du côté opposé est espacée de l'axe de rotation central (R) de la tige de pédale (21) par une première distance décalée (d1) mesurée perpendiculairement à la surface de butée de cale avant du côté opposé ;
la surface de butée de cale arrière (75) est espacée vers l'arrière de l'axe de rotation central (R) de la tige de pédale (21) par une seconde distance décalée (d2) mesurée perpendiculairement à la surface de butée de cale arrière (75) ; et
la surface de butée de cale arrière du côté opposé est espacée de l'axe de rotation central (R) de la tige de pédale (21) par la seconde distance décalée (d2) mesurée perpendiculairement à la surface de butée de cale arrière opposée, les secondes distances décalées (d2) étant inférieures aux premières distances décalées (d1).

14. Pédale de bicyclette (12a, 12b) selon la revendication 1, dans laquelle:
l'élément de serrage avant (23) est couplé de manière pivotante à la première extrémité du corps de pédale (22) autour d'un premier axe de pivot pour pivoter dans une direction généralement vers l'avant selon un premier angle prédéterminé, et
l'élément de serrage arrière (25) est couplé de manière pivotante à la seconde extrémité du corps de pédale (22) autour d'un second axe de pivot pour pivoter dans une direction généralement vers l'arrière selon un second angle prédéterminé qui est supérieur au premier angle prédéterminé.

15. Pédale de bicyclette (12a, 12b) selon l'une quelconque des revendications 14 à 16, dans laquelle :
le corps de pédale (22) a un premier élément d'un élément de sollicitation (28) couplé de manière opérationnelle entre l'élément de serrage avant (23) et le corps de pédale (22) pour pousser l'élément de serrage avant (23) dans une position de mise en prise de cale avant, et
le corps de pédale (22) a un second élément d'un élément de sollicitation (28) couplé de manière opérationnelle entre l'élément de serrage arrière (25) et le corps de pédale (22) pour pousser l'élément de serrage arrière (25) dans une position de mise en prise de cale arrière.

16. Pédale de bicyclette (12a, 12b) selon la revendication 8, dans laquelle :
l'élément de serrage avant du côté opposé est couplé de manière pivotante à la seconde extrémité du corps de pédale (22) pour pivoter selon un plus petit angle que l'élément de serrage arrière du côté opposé.

17. Pédale de bicyclette (12a, 12b) selon la revendication 16, dans laquelle :
le premier élément d'un élément de sollicitation (28) est couplé entre l'élément de serrage avant (23) et l'élément de serrage arrière du côté opposé pour pousser l'élément de serrage avant (23) et l'élément de serrage arrière du côté opposé dans les positions de mise en prise de cale, et
le corps de pédale (22) a un second élément de sollicitation couplé de manière opérationnelle entre l'élément de serrage arrière (25) et l'élément de serrage avant du côté opposé pour pousser l'élément de serrage arrière (25) et l'élément de serrage avant du côté opposé dans les positions de mise en prise de cale.

18. Pédale de bicyclette (12a, 12b) selon la revendication 17, dans laquelle le premier élément d'un élément de sollicitation (28) comprend au moins un premier ressort de torsion avec une partie hélicoïdale située sur une première broche de pivot, une première extrémité du premier ressort de torsion étant en contact avec l'élément de serrage avant (23) et une seconde extrémité du premier ressort de torsion étant en contact avec l'élément de serrage arrière du côté opposé, et
un second élément d'un élément de sollicitation (28) comprend au moins un second ressort de torsion avec une partie hélicoïdale située sur une seconde broche de pivot, la première extrémité du second ressort de torsion étant en contact avec l'élément de serrage arrière (25) et une seconde extrémité du second ressort de torsion en contact avec l'élément de serrage avant du côté opposé.

19. Pédale de bicyclette (12a, 12b) selon la revendication 18 et l'une quelconque des revendications 11 à 13, dans laquelle :
la première broche de pivot couple de manière pivotante l'élément de serrage avant (23) et l'élément de serrage arrière du côté opposé, au corps de pédale (22), et
la seconde broche de pivot couple de manière pivotante l'élément de serrage arrière (25) et l'élément de serrage avant du côté opposé, au corps de pédale (22).
